Europäisches Patentamt

(19) European Patent Office

Office européen des brevets

(11) Publication number: **0 047 588**
**B1**

(12) # EUROPEAN PATENT SPECIFICATION

(45) Date of publication of patent specification: **01.08.84**

(51) Int. Cl.³: **H 04 J 6/02**

(21) Application number: **81303694.4**

(22) Date of filing: **13.08.81**

(54) **Mitigation of noise signal contrast in digital speech interpolation transmission system.**

(30) Priority: **09.09.80 CA 359965**

(43) Date of publication of application:
**17.03.82 Bulletin 82/11**

(45) Publication of the grant of the patent:
**01.08.84 Bulletin 84/31**

(84) Designated Contracting States:
**DE FR GB IT NL SE**

(56) References cited:
**GB - A - 1 250 452**
**US - A - 4 002 841**
**US - A - 4 059 730**

**ELEKTRO-TECHNIK, vol. 45, no. 23, August
1963, WÜRZBURG (DE) "TASI füllt
Gesprächslücken", pages 455-457
1978 NATIONAL TELECOMMUNICATIONS
CONFERENCE, December 1978, BIRMINGHAM
(GB) Conference Record, IEEE Catalog no.
78CH1354-OCSCB, NEW YORK (US) S.J.
CAMPANELLA: "Digital Speech Interpolation
Techniques", pages 14.1.1-14.1.5**

(73) Proprietor: **NORTHERN TELECOM LIMITED
1600 Dorchester Boulevard West
Montreal Quebec H3H 1R1 (CA)**

(72) Inventor: **Black, David Harold Alexander
Box 28, R.R. 1
Chelsea Quebec J0X 1N0 (CA)**
Inventor: **Joyce, Robert Howard
22 Coleman Place Apt. 16
Menlo Park California, 94025 (US)**
Inventor: **Daaboul, Fouad
511 Abelard Apt. 210 Nuns Island
Verdun Quebec, H3E 1B6 (CA)**
Inventor: **Le Van, Tiu
17, Alain Street
Touraine Quebec, J8Z 1K1 (CA)**

(74) Representative: **Crawford, Andrew Birkby et al,
A.A. THORNTON & CO. Northumberland House
303-306 High Holborn
London WC1V 7LE (GB)**

## Description

This invention relates to a method of mitigating noise signal contrast in a multi-channel digital speech interpolation (DSI) transmission system, and to such a system.

A DSI transmission system is known, for example, from Ching et al U.S. Patent No. 4,002,841 issued January 11, 1977. In such a system the bandwidth required for transmitting a plurality of digital voice signal channels via a transmission link, such as a satellite communications or submarine cable link, is reduced by detecting the presence of speech signals on each channel, to determine which channels are active at any instant, and transmitting only those channels which are currently active. The reduced bandwidth requirement results from the presence of speech inactivity times on each individual channel.

Thus in a DSI transmission system each individual channel is alternately connected via the transmission link when the channel is active, and disconnected when the channel is not active, i.e. when no speech signals are present. A significant disadvantage of this connection and disconnection, or switching, of the channel is that it gives rise to a very noticeable and subjectively annoying noise signal contrast at the receiving end of the channel. Thus when the channel is active, the receiving subscriber hears not only the speech of the transmitting subscriber but also background noise which is present in the vicinity of the transmitting subscriber and noise which is present on the transmission channel itself, whereas when the channel is not active and is therefore disconnected the receiving subscriber hears none of this noise.

In order to reduce this noise signal contrast, it is known for the receiver of the DSI transmission system to include a local noise signal generator, and to insert the locally generated noise signal on each channel during the channel's disconnected periods. However, the locally generated noise signal inevitably has different characteristics to those of the actual noise signals transmitted during each channel's active periods, and of course these actual noise signals differ very considerably from one channel to another. As a result, this insertion of locally generated noise at the receiver is not very effective in reducing the noise signal contrast.

It is also known, from Messerschmitt et al U.S. Patent No. 4,059,730 issued November 22, 1977, to provide at the transmitter of the DSI transmission system a noise estimator and a noise signal inserter. The noise estimator produces an adaptively adjusted measure of the noise on each channel, and when the channel becomes inactive this measure is inserted by the noise signal inserter at a predetermined location within the transmitted DSI signals. At the receiver, the locally generated noise signal is adjusted in response to this adaptive noise measure, so that the locally generated noise inserted on the channel during the channel's disconnected periods more closely approximates the actual noise which is transmitted during the channel's connected periods. However, even in this case the characteristics of the actual noise and the locally generated noise differ, so that the subjectively annoying noise signal contrast still persists.

It is also known from U.K. Patent No. 1,250,452 to provide a frequency division multiplex (FDM) transmission system in which continuity of connections is preserved by providing idle "circuits" with 1 kHz bandwidth transmission channels instead of 3 kHz bandwidth channels which are used for voice transmission. The 1 kHz bandwidth is fixed and predetermined. In addition, an article entitled "Digital Speech Interpolation Techniques" by S. J. Campanella, 1978 National Telecommunications Conference, December 1978, Conference Record pages 14.1.1—14.1.5, describes bit reduction techniques to compensate for overload situations in speech interpolation systems.

Objects of this invention are to provide an improved method of mitigating noise signal contrast in a multi-channel DSI transmission system, and to provide an improved multi-channel DSI transmission system.

According to one aspect of this invention there is provided a method of mitigating noise signal contrast in a multi-channel digital speech interpolation transmission system, comprising the steps of:— determining each channel which is active and each channel which carries background noise; transmitting the active channels; and transmitting the channels which carry background noise with a resolution which is dependent upon the number of channels transmitted and which is reduced as said number is increased.

According to another aspect this invention provides, in a multi-channel digital speech interpolation transmission system means for determining each channel which carries background noise (b.n. channel) and each channel which is active; the improvement comprising means for transmitting, in addition to each active channel, each channel which carries background noise with a resolution which is dependent upon the number of channels transmitted and which is reduced as said number is increased.

Thus, in accordance with this invention the background noise channels are transmitted as well as the active channels. In order to enable transmission of the background noise channels, without at the same time unduly impairing the transmission of the active channels, the background noise channels are transmitted with a resolution which depends upon the number of channels transmitted. Thus in a typical operating situation of a system in accordance with this invention, the active channels are transmitted with a first resolution, or bit rate, and the background noise channels are transmitted with a second, lower, resolution or bit rate. Whilst the lower resolution of the background noise channels may result in the background noise heard by the receiving subscriber being less distinct during speech inactivity periods of the relevant channel than it is during active periods of the channel, the annoying noise signal contrast is avoided and in any event the receiving subscriber expects to hear background noise only indistinctly.

In the method of the invention said determining step preferably comprises, for each channel, the steps of:— detecting speech signals on a transmit path of the channel; determining whether the channel is in an off-hook state; detecting echoes on the transmit path of speech signals on a receive path of the channel; determining that the channel is active if speech signals which are not echoes are detected on the transmit path and the channel is in the off-hook state; and determining that the channel carries background noise if speech signals are not detected on the transmit path and the channel is in the off-hook state.

Thus if a channel is in the off-hook state, if speech signals are not detected the channel is determined as carrying background noise, whereas if speech signals are detected the channel is determined as being active unless it is also determined that the detected speech signals are echoes.

Whilst the determination of whether each channel is in an off-hook state may in some cases be able to be effected by examining signalling bits, the use of common channel signalling could prevent a DSI transmission system from receiving signalling information, and accordingly it is desirable that some other method be used to determine whether each channel is in an off-hook state. Accordingly, for each channel, the step of determining whether the channel is in the off-hook state preferably comprises the steps of:— detecting speech signals on the receive path of the channel; and determining that the channel is in the off-hook state in dependence upon the detection of speech signals on the transmit and receive paths during a preceding predetermined period.

For example, the occurrence of two consecutive detections of speech signals on either the transmit path or the receive path of a channel may be used as a criterion that the channel is in the off-hook state, this state lasting until the end of the predetermined period following the last occurrence of two such consecutive detections.

The system in accordance with the invention preferably comprises means for forming superframes each comprising a plurality of multi-bit frames, and the transmitting means preferably comprises:— means for transmitting a digital message in respect of each active channel in each of said frames of the superframe and digital messages in respect of the b.n. channels in said frames of the superframes; means for determining, for each superframe, in dependence upon the numbers of active channels and b.n. channels for that superframe, numbers of bits for the digital messages of each active channel and each b.n. channel; means for producing said digital messages, each of the respective number of bits, from the digital signals of each active channel and each b.n. channel; and means for producing and transmitting, for each superframe, digital information relating to the transmission status of each channel, and the determined number of bits of each of the digital messages, in that superframe.

In such a system the determination of channels which are active and channels which carry background noise is effected once for each superframe. In dependence upon the numbers of active and b.n. channels, a determination is also made as to how the transmission for the relevant superframe will be effected. In the case of each active channel, this involves determining a number of bits which will be used for each digital message of the channel, one such digital message being transmitted for each active channel in each frame of the relevant superframe. In the case of each b.n. channel, this determination involves determining a number of bits which will be used for each digital message of the channel, and may also involve determining in which frames of the relevant superframe a digital message of the respective channel will be transmitted.

The digital information relating to the transmission status of each channel, i.e. whether the channel is transmitted as an active channel or a b.n. channel or whether it is not transmitted in the relevant superframe, and the determined number of bits of each of the digital messages, is required by a receiver of the system in order to enable proper distribution and decoding of the transmitted signals. In order to facilitate the transmission of this digital information, preferably said means for forming superframes is arranged to form each superframe with an additional, overhead information frame in addition to said plurality of frames, said digital information being transmitted in said overhead information frame of each superframe.

Whilst it is possible for different numbers of bits per digital message to be used for all the different channels which are transmitted, or for a first number of bits per digital message to be used for all the active channels and a second number of bits per digital message to be used for all the b.n. channels in one superframe, it is more convenient if all the digital messages of a superframe consist of the same number of bits. This is the case in a preferred embodiment of the invention described hereinafter.

Accordingly, the means for determining numbers of bits for the digital messages preferably serves to determine a number of bits which is common to all of the digital messages in the relevant superframe, whereby a predetermined number of the digital messages each with the determined number of bits can be transmitted in each of said plurality of frames of the relevant superframe, said predetermined number being greater than the number of active channels, and the means for transmitting the digital messages comprises means for transmitting the digital message of each active channel in each of said plurality of frames of the relevant superframe and for transmitting the digital messages of b.n. channels in the remaining available space in each of said plurality of frames, the transmission being effected cyclically for the b.n. channels throughout said plurality of frames of the relevant superframe.

Thus in this case, in a normal loading situation, in each frame of the relevant superframe, other than the additional overhead information frame, a digital message is transmitted in respect of each active channel and in respect of one or more b.n. channels, the transmission of digital messages in respect of the b.n. channels being distributed cyclically among the frames of the superframe. Thus it can be seen that whereas each active channel is transmitted with a resolution which is dependent upon the determined number of bits per digital message, in the general case where said predetermined number of the digital messages each with the determined number of bits is less than the total number of active and b.n. channels to be transmitted, each b.n. channel will be transmitted with a lower resolution which is dependent upon both the determined number of bits per digital message and this total number of channels to be transmitted. Of course, if this total number is not greater than said predetermined number, then a digital message in respect of each b.n. channel can be transmitted in each frame of the superframe.

As in any DSI transmission system, it is possible for an overload situation to arise in which there are more active channels than can be transmitted without unduly restricting the number of bits of each digital message of each active channel. In the present system, said means for transmitting is preferably responsive to an overload situation, in which the number of active channels is equal to or greater than the predetermined number of digital messages which can be transmitted in each of said plurality of frames with a predetermined minimum number of bits for each digital message, to transmit in the relevant superframe only said predetermined number of active channels with each digital message thereof having said predetermined minimum number of bits, b.n. channels not being transmitted in the superframe.

In order to mitigate the occurrence of overload situations, and to facilitate the production of the digital messages of the active channels with different numbers of bits, preferably the means for producing the digital messages of each active channel from the digital signals of the channel comprises a nearly instantaneous companding (NIC) encoder for encoding the digital signals of each active channel in each superframe to produce a maximum segment digital value and a plurality of NIC encoded values, each NIC encoded value constituting a respective one of the digital messages of the active channel, and the means for producing and transmitting said digital information comprises means for transmitting the maximum segment digital value of each active channel in the overhead information frame of the relevant superframe.

Thus the active channels are transmitted using NIC encoding. Whilst it would be advantageous also to transmit the b.n. channels using NIC encoding, this involves the transmission of maximum segment digital values for the b.n. channels as well as for the active channels, and generally there will be insufficient space in the overhead information frame to accommodate these extra values. In this case, therefore, the b.n. channels are preferably transmitted using compact PCM (CPCM) encoding. Thus the means for producing the digital messages of each b.n. channel from the digital signals of the channel comprises means for omitting one or more most significant magnitude bits from each digital signal to produce the respective digital message.

Whilst the use of CPCM encoding for the b.n. channels entails the loss of some information from each digital message, this is not normally a serious disadvantage. As already explained, a receiving subscriber is not concerned if he only hears background noise indistinctly. Furthermore, as background noise is generally at a significantly lower level than speech signals, the most significant magnitude bits of digital signals representing background noise will generally be zero, and they can be omitted from the transmitted information, and zero bits inserted at the receiver in their place, without any actual loss of information.

It is usually the case that the plurality of digital signal channels to be transmitted are derived from at least one source which is asynchronous to the timing of the transmission system. In this case the system preferably comprises, for each such source, synchronizing means comprising:— a store; means for writing the digital signals of the channels from the source sequentially into the store; means for reading the digital signals of the channels sequentially from the store at a higher rate than that at which they are written into the store; means for producing a stuffing command when the phase of reading from the store lags the phase of writing into the store by a predetermined amount; means responsive to the stuffing command for inhibiting the sequential reading from the store of digital signals in respect of a predetermined frame of the superframe whereby said predetermined frame is stuffed; means for transmitting the stuffing command as part of said digital information to identify the superframe including the stuffed frame; and means at a receiver of the system for reconstructing the timing of the asynchronous source and responsive to the stuffing command to ignore the stuffed information in said predetermined frame.

Preferably the means for determining which channels are active and which channels carry background noise comprises:— a speech detector for detecting speech signals on a transmit path, for each channel for each superframe; an off-hook detector for determining, for each channel for each superframe, whether the channel is in an off-hook state; an echo detector for detecting, for each channel for each superframe, signals on the transmit path which are echoes of signals on a receive path; and gating means for producing for each channel for each superframe, a signal representing that the channel is active if speech signals which are not echoes are detected on the transmit path and the channel is in the off-hook state, and a signal representing that the channel carries background noise if speech signals are not detected on the transmit path and the channel is in the off-hook state.

The detectors are preferably responsive to an average signal for each channel, the system including means for producing, for each superframe, said average signal for each channel from the digital signals of the channel.

The invention will be further understood from the following description of a preferred embodiment thereof with reference to the accompanying drawings, in which:—

Fig. 1 shows a block diagram of a DSI transmitter;

Fig. 2 and 3 illustrate timing signals with reference to which the operation of the transmitter is explained;

Fig. 4 illustrates a synchronizer and multiplexer of the transmitter;

Fig. 5 illustrates an offset remover and averaging circuit of the transmitter;

Fig. 6 illustrates an off-hook detector of the transmitter;

Figs. 7A to 7D illustrate an assignment control unit of the transmitter;

Figs. 8A to 8C, when placed side-by-side, illustrate an encoder and buffer of the transmitter;

Fig. 9 shows a block diagram of a DSI receiver; and

Fig. 10 illustrates parts of the receiver with reference to which synchronization and destuffing in the receiver are explained.

Before proceeding with the detailed description referring to the drawings, the overall operation of the DSI apparatus is briefly explained.

The transmitter is designed to accept two DS1 bit streams, each of which as is well known consists of frames each of 193 bits at a nominal bit rate of 1.544 M bits/sec, the 193 bits of each frame being constituted by 24 channels each of 8 bit PCM information and one synchronizing bit. After synchronization of these bit streams to the internal timing of the DSI transmitter, the 192 information bits of each frame of each bit stream are multiplexed to produce 48 channels each of 8 bits in each frame, referred to hereinafter as a sample frame. 27 such sample frames constitute a superframe of the DSI apparatus.

During each superframe, the information of each of the 48 channels is analysed and for each channel decisions are made as to whether the channel carries speech information (or data), an echo, and whether the channel (or, more particularly, the subscriber to which the channel is connected) is off-hook. If a channel is off-hook and there is no echo decision, the channel is determined to be active (i.e. carrying speech) in the presence of the speech decision and to be carrying background noise in the absence of the speech decision. Depending on the numbers of active and background noise channels, a decision is made as to how many bits will be used to transmit each 8 bit PCM word via the DSI transmission link in the next superframe. This can be 8, 7, or 6 bits depending upon the prevailing channel loading. If the decision is to transmit each word using 7 or 6 bits, then the information on the active channels is transmitted using 7 or 6 bit, respectively, NIC (nearly instantaneous companding) and the information on the background noise channels is transmitted using 7 or 6 bit, respectively, CPCM (compact PCM).

The actual transmission via the DSI link is effected at a nominal bit rate of 1.544 M bits/second in 186-bit frames 28 of which form a superframe. The first frame in each superframe contains overhead information including the number of bits per word used for the transmission in that superframe, NIC header bits, and an assignment control word which indicates whether each channel is being transmitted 'continuously' or 'partially' in that superframe, or whether the channel is not being transmitted in the superframe. Active channels are transmitted 'continuously', which term is used herein to mean that information in respect of the particular channel is transmitted in each of the 2nd to 28th frames of the DSI superframe. In a normal loading situation, background noise channels are transmitted 'partially', which means that information in respect of the particular channel may be transmitted in only some of the 2nd to 28th frames of the DSI superframe, the particular frames being determined by cyclic assignment. In a severe underload situation some background noise channels may be transmitted continuously, in which case they are treated in the same manner as active channels. Channels which are on-hook or in respect of which there is an echo decision are not transmitted except in a very severe underload situation when some of them may be transmitted continuously (if echo decision channels are transmitted, their information is suppressed before transmission). In a severe overload situation (29 or more active channels) 29 active channels are transmitted continuously and all other channels are not transmitted. In each superframe, the channel information in any sample frame n is transmitted in the (n+1)th frame of the DSI transmission.

Transmitter

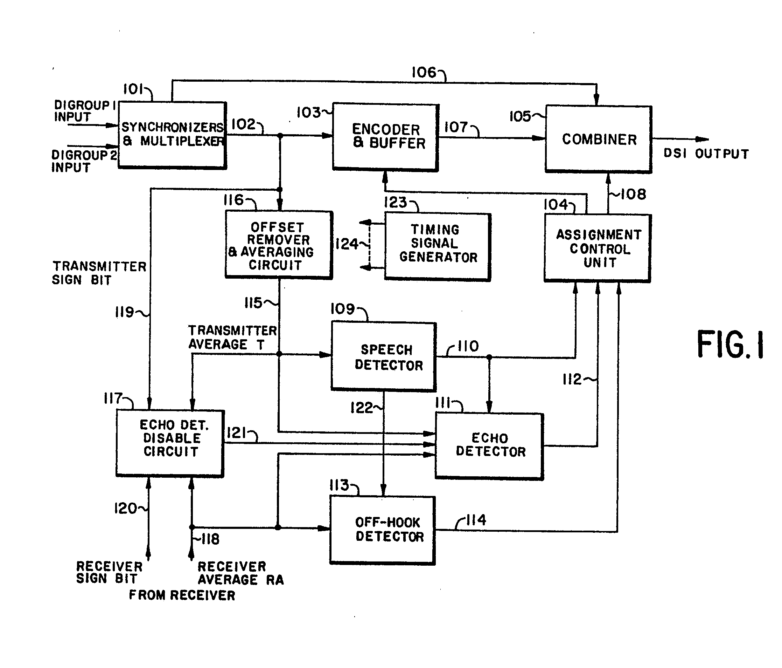

The DSI transmitter is illustrated in Fig. 1. The two incoming DS1 bit streams, referenced digroup 1 input and digroup 2 input, are applied to a unit 101 which contains two synchronizers, one for each digroup, and a multiplexer which multiplexes the channels of the two digroups. The information contained in the 48 multiplexed channels is applied via lines 102 to an encoder and buffer unit 103 which is controlled by an assignment control unit 104. An output signal combiner 105 combines signalling and stuffing information supplied from the unit 101 via lines 106, encoded and buffered channel information supplied from the unit 103 via lines 107, and assignment and word length information supplied from the unit 104 via lines 108, into the DSI output signal for transmission via the DSI link.

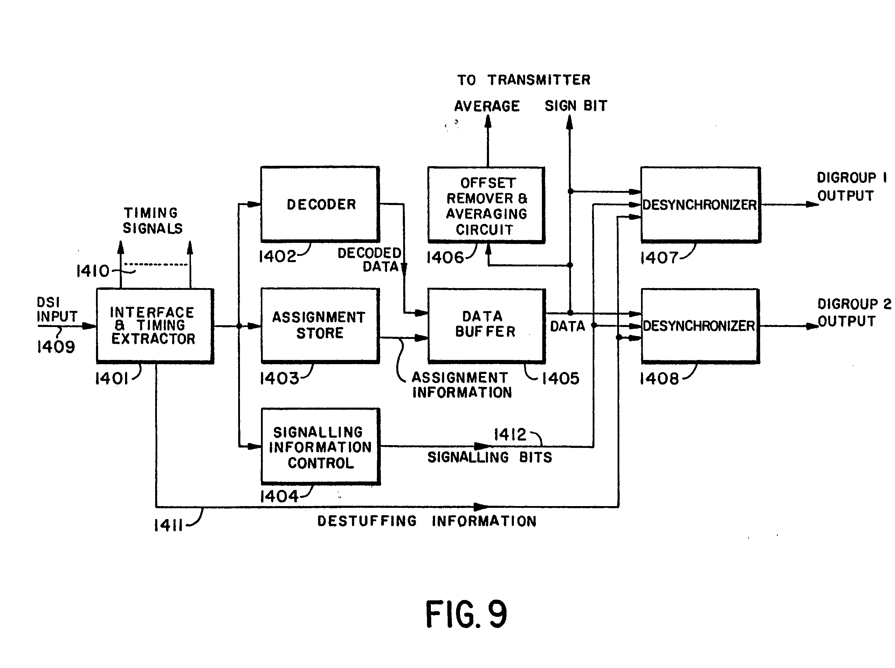

The assignment control unit 104 is responsive to the speech, echo, and off-hook decisions already referred to, which decisions are supplied by respectively a speech detector 109 via a line 110, an echo detector 111 via a line 112, and an off-hook detector 113 via a line 114. The speech detector 109 is responsive to an average of the channel information, for each channel, which is produced on lines 115 by an offset remover and averaging circuit 116 to which the lines 102 are connected. This average is referred to as the transmitter average T, and is also supplied to the echo detector 111 and to an echo detector disable circuit 117. A receiver average RA, which is produced in an adjacent receiver for the opposite transmission direction as described below with reference to Fig. 9, is supplied via lines 118 to the echo detector 111, the off-hook detector 113, and the echo detector disable circuit 117. The latter circuit, in response to the averages supplied on the lines 115 and 118 and sign bits supplied thereto within the transmitter via a line 119 and from the receiver via a line 120, detects the presence of any disabling tone in either transmission direction and if any such tone is detected supplies a disabling signal to the echo detector 111 via a line 121. The echo detector 111 is also responsive to the speech decision on the line 110, and the off-hook detector 113 is also responsive to a comparison signal available from the speech detector 109 and supplied via a line 122.

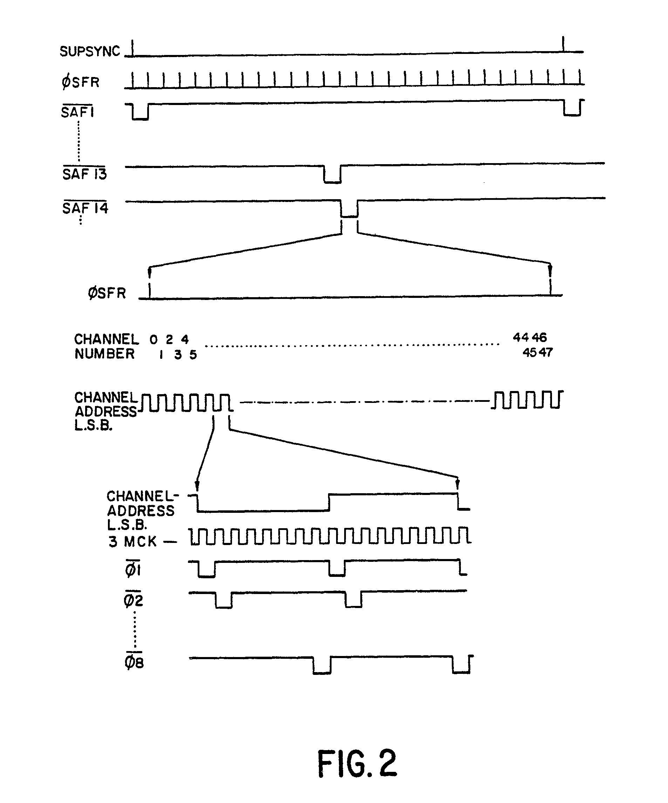

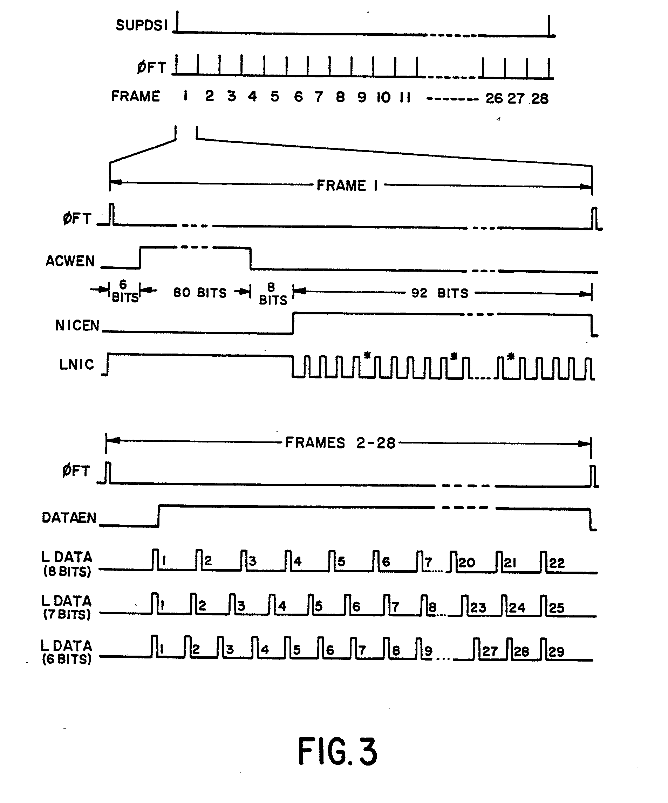

The transmitter also includes a timing signal generator 123 which generates, and supplies to the various other parts of the transmitter via lines 124, timing signals and a transmitter channel address which are described below with reference to Figs. 2 and 3. Fig. 2 relates to the internal timing of the transmitter, and Fig. 3 relates to the timing of the signals transmitted via the DSI link.

The internal timing of the transmitter is controlled predominantly by a 3.088 MHz clock signal, designated 3MCK in the drawings. The generator 123 also produces clock signals at frequencies of 6.176 MHz and 1.544 MHz, designated 6MCK and 1.5MCK respectively in the drawings. As has already been stated, the internal timing of the transmitter superframes are formed each by 27 sample frames. Referring to Fig. 2, the start of each superframe is marked by a pulse of a signal SUPSYNC which pulse has a duration of 22 periods of the clock 3MCK, and the start of each sample frame is marked by a pulse of a signal $\emptyset$SFR which pulse has a duration of 1 period of the clock 3MCK. Between these pulses, in each of the 27 sample frames, there are 8 periods of the clock 3MCK for each of the 48 channels. Thus in each superframe in the internal timing of the transmitter there is a total of $22+(27-1)+27.8.48=10416$ periods of the clock 3MCK. Thus each superframe has a duration of 10416/3,088,000 seconds, or 3.373 ms.

Referring again to Fig. 2, each of the 27 superframes is identified by a respective one of signal $\overline{SAF1}$ to $\overline{SAF27}$, only the signals $\overline{SAF1}$, $\overline{SAF13}$, and $\overline{SAF14}$ being shown in Fig. 2 by way of example. In each sample frame the signal generator 123 generates a 6-bit transmitter channel address which is stepped periodically through 48 bit combinations, corresponding to the 48 channels numbered 0 through 47 in Fig. 2, during the sample frame. Thus each individual channel address, identifying one of the 48 channels, persists for 8 periods of the clock 3MCK. This is indicated in Fig. 2 by an illustration of only the least significant bit (L.S.B.) of the channel address, there being 8 periods of the clock 3MCK between consecutive changes in this bit. During each of these periods a respective one of signals $\overline{\emptyset 1}$ through $\overline{\emptyset 8}$ is produced, only the signals $\overline{\emptyset 1}, \overline{\emptyset 2}$ and $\overline{\emptyset 8}$ being shown in Fig. 2 by way of example.

Fig. 3 illustrates timing signals relating to the transmission via the DSI link. As already stated, this transmission is effected in superframes each of 28 frames each of 186 bits, so that there are 28.186=5208 bits in each superframe at a nominal bit rate of 1.544 Mbits/second governed by the clock 1.5MCK. Thus the superframe duration is 5208/1,544,000 seconds, or 3.373 ms; i.e. the same as that for the internal timing of the transmitter. Thus the timing within the transmitter is the same as the DSI link, so that no stuffing, but only buffering, is necessary therebetween.

The superframes and frames for transmission on the DSI link are marked by signals SUPDSI and ØFT respectively, shown in Fig. 3. Fig. 3 also illustrates signals ACWEN, NICEN, and LNIC which are produced in the first frame, and signals DATAEN and LDATA which are produced in each of the second through 28th frames, which are described later below.

Synchronizers and multiplexer

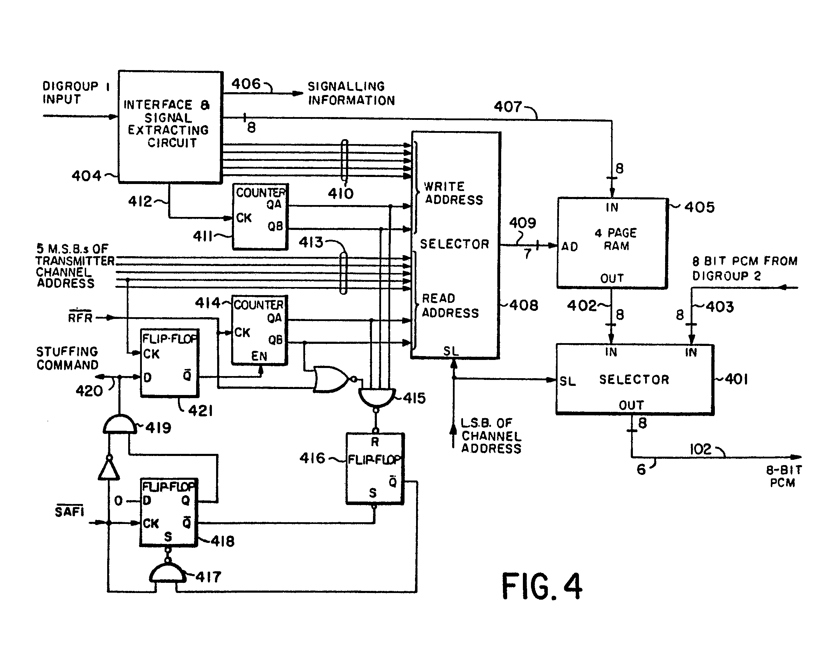

Fig. 4 illustrates in more detail one of the two synchronizers, and the multiplexer, of the unit 101. The multiplexer is constituted by an 8-bit selector 401 whose inputs are connected to outputs of the two synchronizers via lines 402 and 403 and whose output is connected to the lines 102. In Fig. 4, and elsewhere in the drawings, multiple lines are indicated by a single line on which is marked a bar with an adjacent numeral indicating the number of lines; e.g. each of the 8-bit wide parallel data lines 102, 402, and 403 in Fig. 4 is represented by a single line marked with a bar and an adjacent numeral 8.

The synchronizer shown in Fig. 4 includes an interface and signal extracting circuit 404, to which the digroup 1 input is applied, and a 4-page RAM (random access memory) 405 the output of which is connected to the lines 402. The circuit 404 extracts signalling information from the incoming bit stream and supplies this via lines 406, corresponding to some of the lines 106 in Fig. 1, to the output signal combiner 105. The circuit 404 also converts the channel information of the incoming bit stream into 8-bit wide parallel PCM data and supplies this via lines 407 to the input of the RAM 405.

The RAM 405 is addressed alternately with a write address and a read address which are applied to inputs of a selector 408 whose output is connected to an address input AD of the RAM via lines 409. The selector 408 is controlled by the L.S.B. of the transmitter channel address applied to its select input SL; this L.S.B. is also applied to the select input SL of the selector 401, and is applied in inverted form to the select input of a selector, corresponding to the selector 408, in the other synchronizer to which the digroup 2 input is applied. The two synchronizers are otherwise identical. This arrangement provides that when information is being written into the RAM of one synchronizer, it is being read out from the RAM of the other synchronizer and being conducted via the multiplexer (selector 401) to the lines 102.

Each of the write and read addresses consists of a 5-bit channel address, identifying one of the 24 channels, and a 2-bit page address identifying one of the 4 pages of the RAM. Each location in the RAM 405 serves to store an 8-bit PCM word. The circuit 404 supplies the write channel address via lines 410 to the selector 408, and once every incoming frame increments a write page counter 411, whose outputs QA and QB constitute the 2-bit write page address, via a line 412 connected to the clock input CK of the counter. The read channel address is constituted by the 5 most significant bits of the transmitter channel address, supplied to the selector 408 via lines 413. The read page address is constituted by the outputs QA and QB of a read page counter 414 which, provided that it is enabled by a logic 1 at its enabling input EN, is incremented once every sample frame by a signal $\overline{RFR}$ applied to its clock input CK.

Thus 24×8=192 of the 193 bits in each frame of the incoming bit stream are written into the RAM 405. The synchronizing bit of each frame is not stored in the RAM 405. As the incoming bit stream has a nominal bit rate of 1.544 Mbits/second, the average bit rate written into the RAM 405 is

$$1544000 \times 192/193 = 1536000$$

bits per second. The average bit rate read out from the RAM 405 is

$$3088000 \times 5184/10416 = 1536885$$

bits per second, because in each superframe 27.24.8=5184 bits are read out from the RAM during the 10416 periods of the clock 3MCK. Thus read out from the RAM 405 takes place on average 885 bits per second faster than write in, so that the synchronizer must provide a positive stuff rate of 885 bits/second. In fact stuffing is effected on a frame basis, 192 bits per time, as described below, so that stuffing is effected at an average rate of 885/192=4.6 frames per second. As there are about 296 superframes per second, frame stuffing occurs on average about once every 64.5 superframes. These figures are based on nominal bit rates and clock frequencies, and in practice there is some departure from these so that frame stuffing may typically occur on average about once every 50 to 90 superframes.

In order to effect frame stuffing, the phases of the write and read addresses in the synchronizer are effectively compared by a NAND gate 415 which, when the read page approaches the write page, produces a logic 0 output which is supplied to the reset input R of a normally set flip-flop 416 to reset this flip-flop. The resulting logic 1 at the $\overline{Q}$ output of the flip-flop 416 enables a NAND gate 417 so that if or when the signal $\overline{SAF1}$ is a logic 1, i.e. other than during sample frame 1, a flip-flop 418 is set via its setting input S. The resulting logic 0 at the $\overline{Q}$ output of the flip-flop 418 returns the flip-flop 416 to its normally set state via its setting input S.

The logic 1 at the Q output of the set flip-flop 418 enables an AND gate 419 to produce a logic stuffing command on a line 420, which constitutes another one of the lines 106 in Fig. 1, during the next sample frame 1. This logic 1 is also applied to the data input D of a flip-flop 421 which is clocked by the fourth most significant bit of the transmitter channel address so that its $\bar{Q}$ output becomes a logic 0. This $\bar{Q}$ output is connected to the enabling input EN of the read page counter 414, which is consequently not incremented by the next pulse of the signal $\overline{RFR}$. In consequence, during the stuffing command in this sample frame 1 the information read out from the RAM 405 is redundant; this information appears in frame 2 on the DSI link and is ignored by the receiver. At the end of this sample frame 1, the signal $\overline{SAF1}$ becomes a logic 1 to terminate the stuffing command and to trigger the flip-flop 418 via its clock input CK, so that the Q output of the flip-flop 418 adopts the logic 0 state which is applied to this flip-flop's data input D. The logic 0 at the output of the AND gate 419 is clocked into the flip-flop 421 so that the read page counter 414 is again enabled. Thus stuffing (repetition) of one frame, of 192 bits, is accomplished.

It is observed here that the above described stuffing takes place, in the same manner, but completely independently, in the other synchronizer.

Offset remover and averaging circuit

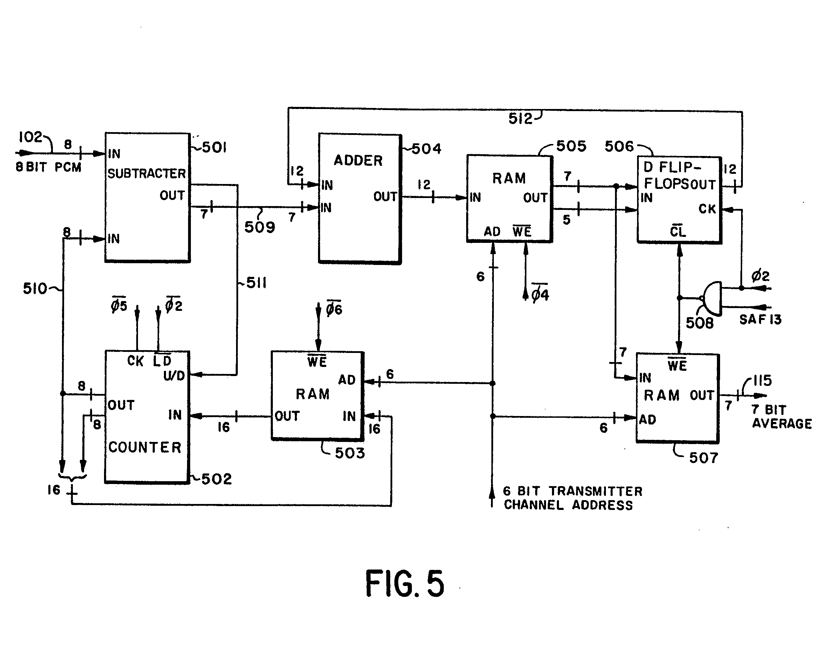

Fig. 5 illustrates the offset remover and averaging circuit 116. The offset remover consists of an 8-bit subtracter 501, a 16-bit up/down counter 502, and a 48-channel by 16-bit RAM 503. The averaging circuit consists of a 12-bit adder 504, a 48-channel by 12-bit RAM 505, 12 D flip-flops 506, a 48-channel by 7-bit RAM 507, and a NAND gate 508. Each of the RAMs has a write enable input $\overline{WE}$ and an address input AD, for addressing one channel at a time, to which the 6-bit transmitter channel address is applied.

The offset remover serves to produce on lines 509 for each channel a 7-bit magnitude signal from which long-term d.c. offsets have been removed, and to this end the offset remover in operation reaches an equilibrium state in which for each channel a 16-bit offset value of the channel is stored in the RAM 503. In each sample frame, during each channel address the stored offset value of the particular channel is available at the output of the RAM, and with the signal $\overline{\emptyset 2}=0$ applied to a load input $\overline{LD}$ of the counter 502 is loaded into the counter and is available at the counter output. The 8 most significant bits of the offset value are applied via lines 510 to the subtracter 501, to which the 8-bit PCM channel information for the particular channel is also applied from the lines 102 of Fig. 1. The subtracter 501 subtracts the offset value bits from the channel information bits to produce the 7-bit magnitude signal on the lines 509 and a sign bit on a further output line 511. This line 511 is connected to an up/down counting control input U/D of the counter 502. The counter counts the subsequent pulse of the signal $\overline{\emptyset 5}$, which is

applied to its clock input CK, either up or down from the initially loaded 16-bit offset value and produces a new offset value at its output. This new offset value is written into the RAM 503, in place of the old offset value, with the signal $\overline{\emptyset 6}=0$ applied to the $\overline{WE}$ input of the RAM. This cycle is repeated for subsequent channel addresses.

In the long term, the equilibrium state reached is such that for each channel the numbers of positive and negative sign bits produced on the line 511 are equal. Although the stored offset value of each channel varies, only the 8 most significant bits of this are subtracted from the channel information, and in fact 256 bits of one polarity are required in order to change the subtracted offset value bits by one step.

The averaging circuit serves to produce on the lines 115 of Fig. 1 for each channel what is termed herein the transmitter average T; in fact in order to simplify implementation of the circuit what is produced is a fraction of 27/32 of the actual average. This average T is updated with the signal $\overline{\emptyset 2}=1$ in sample frame 13 of each superframe, in that the signals $\emptyset 2$ and SAF13 are supplied to the inputs of the NAND gate 508 whose output is connected to the $\overline{WE}$ input of the RAM 507 and to a clear input $\overline{CL}$ of the flip-flops 506.

In each sample frame, for each channel, with the signal $\overline{\emptyset 4}=0$ applied to the $\overline{WE}$ input of the RAM 505 the output of the adder 504 is stored in the RAM 505. The adder output is equal to the sum of the 7-bit magnitude signal of the particular channel, present on the lines 509, and a 12-bit cumulative sum for the particular channel present on the lines 512. The cumulative sum for the channel is the previously stored sum for the channel, which is clocked through the flip-flops 506 with the signal $\overline{\emptyset 2}=1$ applied to the clock input CK of these flip-flops, except in sample frame 13 when the flip-flops 506 are cleared so that the cumulative sum is zeroed. Thus with the signal $\emptyset 2=1$ in sample frame 13 of each superframe, for each channel, the 12-bit cumulative sum available at the output of the RAM 505 is equal to the sum of the magnitude signals for that channel during the preceding 27 sample frames. Only the 7 most significant bits of this sum are written into the RAM 507 to achieve a division of the sum by a factor of 32; hence the transmitter average T is actually 27/32 of the actual average of the channel information in the preceding 27 sample frames. However, this minor difference does not adversely affect the operation of parts of the apparatus described below.

Speech detector

The speech detector 109, can take any of various known forms of speech detector. However, the performance of the DSI transmission system is dependent to a considerable extent on the ability of the speech detector to detect speech signals in the presence of noise. The speech detector should be able to detect speech signals at low levels in order to avoid excessive clipping of speech signals at the start of speech utterances, but at the same time should not respond to relatively high levels of noise alone because this would undesirably increase the activity of the DSI transmission. Accordingly, the speech detector 109 is preferably as described and claimed in our European Application EP—A—0 047 589 entitled "Method of and Apparatus for Detecting Speech in a Voice Channel Signal". This speech detector is designed to exploit differences in the characteristics of noise and speech signals, namely that (a) speech signals usually have a higher level than noise, and (b) whereas noise is continuous, speech signals occur in bursts with the signal level progressively increasing at the start of each burst.

The speech detector includes two independent parts, which are referred to as a level detector and a slope detector, whose outputs are combined in an OR gate to produce for each channel a speech decision which is stored in a 48-channel decision store, to the output of which the line 110 is connected. Each of the detectors is supplied with the transmitter average T on the lines 115, and is enabled in sample frame 14 to update the decision which is effected in each superframe. In its preferred form, each of these detectors comprises a read-only memory (ROM).

### Echo detector

The echo detector 111 can take any of various known forms of echo detector. However, the production of the echo decision is hampered by the fact that the received signals are delayed by a variable end delay of up to 25 ms before appearing as an echo in the transmitter, and the transmitter and receiver signals are not synchronous. Accordingly, the echo detector 111 is preferably as described and claimed in our European Application EP—A—0 047 590 entitled "Method of and Apparatus for Echo Detection in Voice Channel Signals". This echo detector compares, for each channel once in each superframe, the transmitter average T with the maximum or peak receiver average RA which has occurred in the present and preceding 8 receiver superframes. The 8 superframes have a duration of about 27 ms, which is sufficient to accommodate the maximum end delay of 25 ms. The echo detector in fact determines the peak receiver average, effects this comparison, and updates the echo decision which it produces on the line 112, for each channel during sample frames 15 and 16 in each superframe.

### Echo detector disable circuit

In order to disable echo suppressors for the transmission of data via a connection line, data sets transmit via the connection line an initial tone of 2100 Hz nominal frequency with a duration of 300 to 400 ms. The echo detector disable circuit 117 serves to detect this tone and upon such detection to produce a signal on the line 121 to prevent production of an echo decision by the echo detector 111, and hence to avoid echo suppression, for the relevant channel. The circuit 117 includes separate tone detectors for the transmit and receive paths and serves to produce the signal on the line 121 for the relevant channel if a disabling tone is detected in either transmission direction.

### Off-hook detector

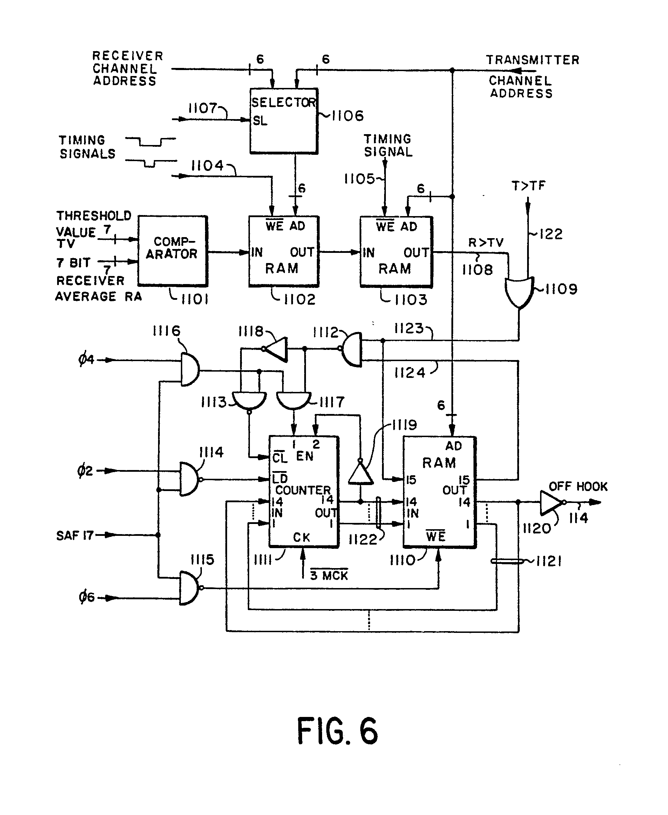

The off-hook detector 109, which is illustrated in detail in Fig. 6, serves to distinguish between idle (on-hook) and busy (off-hook) channels solely from the information of each channel, i.e. without knowledge of the signalling status for each channel. This is important because the use of common channel signalling could prevent the DSI transmission system from receiving signalling information.

On an idle channel only noise is present, whereas on a busy channel speech is present in one of the two transmission directions on average about 75% of the time, with pauses of generally no more than a few seconds. The off-hook detector 109 uses this distinction to deem a channel on-hook unless, within a period of $2^{13}=8192$ superframes or about 28 seconds, the receiver average RA or the transmitter average T exceeds a respective threshold in at least two consecutive superframes. The requirement for the threshold to be exceeded in at least two consecutive superframes reduces the risk that an on-hook channel will be deemed to be off-hook in response to noise transients.

Accordingly, referring to Fig. 11, the off-hook detector includes a comparator 1101 which for each channel compares the receiver average RA with a threshold value TV. The comparison result is synchronized to the transmitter timing by being written into and read from RAMs 1102 and 1103 under the control of timing signals supplied to the write enable inputs $\overline{WE}$ of these RAMs via lines 1104 and 1105. The RAM 1103 is addressed for each channel by the transmitter channel address; the RAM 1102 is selectively supplied with either the transmitter channel address or the receiver channel address (which has the same characteristics as the transmitter channel address but controls operations within the receiver) via a selector 1106 to select input SL of which a further timing signal is supplied via a line 1107. Consequently, for each channel a signal R>TV is supplied from the output of the RAM 1103 via a line 1108 to one input of an OR gate 1109, to a second input of which the signal T>TF produced in the speech detector 109 is applied via the line 122. The output of the OR gate 1109 is a logic 1 if for the particular channel either RA>TV or T>TF.

The remainder of the off-hook detector com-

prises a 48-channel×15-bit RAM 1110, a 14-bit counter 1111 having a clear input $\overline{CL}$, a load input $\overline{LD}$, a clock input CK to which the clock $\overline{3MCK}$ is supplied, and count enable inputs EN1 and 2, 2-input NAND gates 1112 to 1115, 2-input AND gates 1116 and 1117, and inverters 1118 to 1120. The off-hook detector updates its decision for each channel in sample frame 17 of each superframe. In this sample frame, for each channel, with the signal $\emptyset 2=1$ the output of the gate 1114 is zero to cause the counter 1111 to be loaded with a previous 14-bit count stored in the RAM 1110 and present on lines 1121, with the signal $\emptyset 4=1$ the gates 1113 and 1117 are enabled by the output of the gate 1116, and with the signal $\emptyset 6=1$ the output of the gate 1115 is zero to cause the current 14-bit count of the counter present on lines 1122, and the logic level at the output of the OR gate 1109 and present on a line 1123, to be written into the RAM 1110 at the respective channel address. The logic level on the line 1123 is present at the output of the RAM 1110 and on a line 1124 when the signals SAF17=1 and $\emptyset 4=1$ during the next superframe.

For each channel, if the signal on the line 1123 is 1 in two successive superframes, then in the second of these superframes the gate 1112 receives a logic 1 from each of the lines 1123 and 1124 to produce a 0 output which inhibits counting by the counter 1111 via the gate 1117 and the counter input EN1 and clears the counter via the inverter 1118, gate 1113, and counter input $\overline{CL}$. Consequently a count of zero is stored in the RAM 1110 with the signal $\emptyset 6=1$. The most significant, or 14th, bit position of the store count is inverted by the inverter 1120 to produce the signal OFF HOOK=1 on the line 114; i.e. the channel is deemed to be busy or off-hook.

If the signal on the line 1123 is not 1 in the two successive superframes, then the gate 1112 produces a 1 output which does not clear the counter 1111 but enables the counter via the gate 1117 and input EN1 with the signal $\emptyset 4=1$. If the count loaded into the counter with the signal $\emptyset 2=1$ is less than 8192, i.e. if the M.S.B. of the count is 0, then the counter is also enabled via the inverter 1119 and its input EN2. In this case the counter is enabled to count one pulse of the clock $\overline{3MCK}$, and the incremented count is stored in the RAM 1110. If this situation continues for a holdover time of about 28 seconds, i.e. if for one channel for 8192 superframes following clearing of the counter the signal on the line 1123 is not 1 in two successive superframes, the count of the counter is incremented to 8192 so that its M.S.B. is 1. Accordingly, the signal on the line 114 becomes 0 for the channel, indicating that the channel is idle or on-hook. The M.S.B., each time that it is loaded into the counter 1111, now inhibits incrementing of the count via the inverter 1119 and input EN2, so that the channel continues to be deemed on-hook until the counter 1111 is again cleared for the particular channel.

Assignment control unit

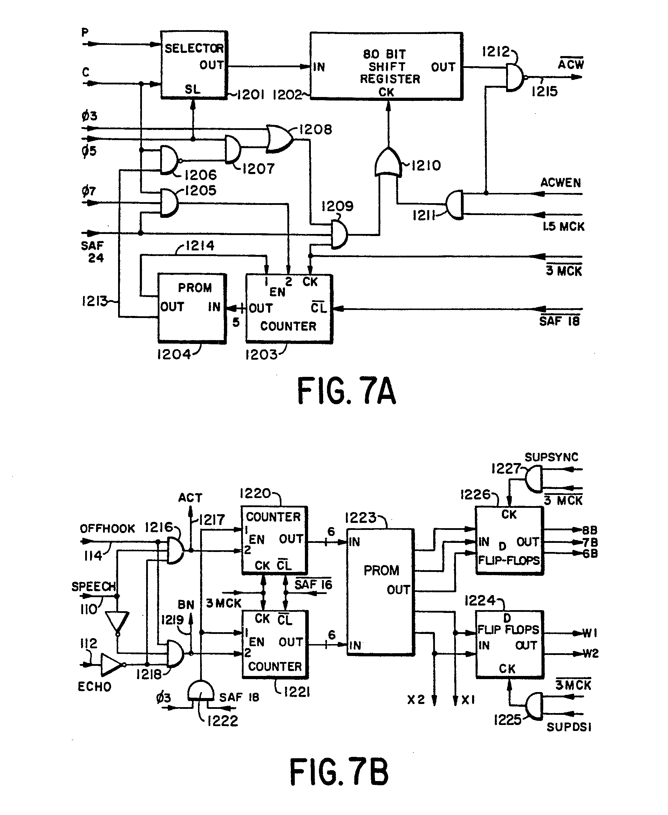

The assignment control unit 104 determines, in sample frames 18 to 22 of each superframe, which channels will be transmitted and how they will be transmitted in the following superframe. The unit 104 also generates an assignment control word ACW for transmission in the first frame of each superframe on the DSI transmission link, and also controls the transmission of channels which are transmitted partially rather than continuously. Parts of the assignment control unit are illustrated in Figs. 7A to 7D.

Before the assignment control unit is described further, the DSI transmission link format is explained in detail. As previously described, each superframe on the DSI link consists of 28 frames each of 186 bits. The first bit in each frame is alternately 1 and 0, being 1 in odd-numbered frames, to provide a frame reference pattern; the second bit in each frame is 0 in all odd-numbered frames and is 1 in frame 2, 0 in frame 4, and 1 in frame 6 to provide a superframe reference pattern. The second bit in frames 8, 10, 12, and 14 provides a 4-bit reference pattern for the signalling frames of digroup 1, in frames 16, 18, and 20 constitutes a remote alarm indicator, and in frames 22, 24, 26, and 28 provides a 4-bit reference pattern for the signalling frames of digroup 2. In each of frames 2 to 28 the 3rd through 10th bits are signalling bits and the remainder of the frame comprises 176 data bits. In frame 1 bits 3 and 4 are stuff indication bits, one for each digroup; bits 5 and 6 are word length bits W1 and W2 described below, bits 7 through 86 are constituted by the assignment control word of 80 bits, the following 7 bits constitute a single error correcting Hamming code for protection of bits 3 through 86, the following bit is a 0 for zero code suppression (the transmission via the DSI link being in inverted form), and the remaining 92 bits comprise 29 3-bit NIC header codes and 5 zeros for zero code suppression. Referring back to Fig. 3, it can be seen that in frame 1 the signal ACWEN is 1 during bits 7 through 86 to enable transmission of the assignment control word ACW, and the signal NICEN is 1 during the last 92 bits of the frame to enable transmission of the NIC header codes and associated zero code suppression bits. When the signal NICEN becomes 1 the signal LNIC, which has been a logic 1, becomes alternately 0 for two periods of the clock 1.5MCK and 1 for one period of the clock 1.5MCK for effecting the transmission of individual NIC header codes as described below, except that every fifth 0 of the signal LNIC lasts for an extra clock period, as indicated in Fig. 3 by asterisks, to provide the zero code suppression bits.

The 176 data bits in each of frames 2 to 28 of the DSI superframe can be constituted by 29 6-bit words (with 2 bits unused), 25 7-bit words (with 1 bit unused), or 22 8-bit words, the number of bits in each word of a superframe being determined as described below by the assignment control unit. It follows that a maximum of 29 channels can be transmitted continuously via the DSI transmission link; this number is both the maximum number of words which can be accommodated in each of frames 2 to 28 and the maximum number of NIC header codes, one for each channel, which can be accommodated in frame 1.

As already described, the assignment control word comprises 80 bits which indicates sequentially the transmission status, in the relevant superframe, of each of the 48 channels. A channel which is not transmitted in the superframe is assigned a 2-bit code 00 in the assignment control word ACW. A channel which is transmitted partially in the superframe is assigned a 2-bit code 01 in the word ACW. The first to eighth and tenth to 17th channels which are transmitted continuously are each assigned a single-bit code 1 in the word ACW, and the 9th channel and any other channels (18th to 29th) which are transmitted continuously are each assigned a 2-bit code 10 in the word ACW. This latter requirement avoids more than 9 consecutive zeros being present in the transmitted word ACW on the DSI link. As the word ACW is required always to consist of exactly 80 bits, the restriction is imposed that in each superframe at least 17 channels are transmitted continuously. For example if in a superframe channel numbers 0, 1, 3 and 6 are to be transmitted continuously, channel number 2 is not being transmitted, and channel numbers 4 and 5 are to be transmitted partially, then their transmission status in the superframe would be represented by the first 10 bits of the assignment control word ACW being 1100101011.

Fig. 7A illustrates a part of the assignment control unit, which serves to produce the assignment control word in dependence upon signals P and C which are produced elsewhere in the assignment control unit as described below. For each channel, the signals P=0, C=0 indicate that the channel is not being transmitted, P=1, C=0 indicate that the channel is to be transmitted partially, and P=0, C=1 indicate that the channel is to be transmitted continuously, in the superframe. This part of the unit 104 comprises a selector 1201, an 80-bit shift register 1202, a counter 1203, a PROM 1204, and gates 1205 through 1212.

In sample frame 24, for each channel, with the signal Ø3=1 the output of the OR gate 1208 is 1 and the signal SAF24=1 so that the AND gate 1209 is enabled to supply one pulse of the clock 3MCK via the OR gate 1210 to the clock input CK of the shift register 1202. At this time the signal Ø5=0 is applied to the select input SL of the selector 1201, with the result that the signal C for the relevant channel is entered into the shift register 1202. Subsequently, with the signal Ø5=1, the AND gate 1207 is enabled. If for the channel the signal C=0, then the output of the gate 1206, and hence the gates 1207 and 1208, is 1 to enable a further pulse of the clock 3MCK to be applied via the gates 1209 and 1210 to the shift register 1202 to enter the signal P, now selected by the selector 1201, into the shift register. If for the channel the signal C=1, then the signal P=0 is similarly entered into the shift register 1202 only if the PROM 1204 supplies a 0 signal on an output line 1213. The PROM 1204 is responsive to the count of the counter 1203 to produce a 0 signal on the line 1213 only for counts of 8 and 17, and to produce a 0 signal on a further output line 1214 only for the count of 17. For each channel for which the signal C=1, with the signal Ø7=1 the counter 1203 is enabled via an input EN2, and if its count is not 17 is enabled by the line 1214 connected to an input EN1, to count one pulse of the clock 3MCK applied to its clock input CK. Thus the counter 1203 counts the number of channels which have been coded in the word ACW as being continuous. The counter is cleared in each sample frame 18 by the signal SAF18 applied to its clear input CL.

Thus at the end of sample frame 24 the 80-bit assignment control word ACW is present in the shift register 1202. With the signal ACWEN=1 this 80-bit word is shifted out of the register 1202, under the control of the clock 1.5MCK applied to the shift register via the gates 1211 and 1210, and via the gate 1212 to an output line 1215, which constitutes one of the lines 108 in Fig. 1, for transmission.

Fig. 7B illustrates the part of the assignment control unit 104 which determines for each superframe the number of bits, 8, 7, or 6, which are to be used for the transmission of each information word of each transmitted channel.

It will be recalled that nonidle (off-hook), non-echo channels are classified as being active or background noise (b.n.) channels depending on the speech decision reached by the speech detector. To this end, in dependence upon the signals OFF HOOK, SPEECH, and ECHO present on the lines 114, 110, and 112, an AND gate 1216 produces a signal ACT=1 on a line 1217 for each active channel and an AND gate 1218 produces a signal BN=1 on a line 1219 for each b.n. channel. During sample frame 16 two 6-bit counters 1220 and 1221 are cleared by the signal SAF16 applied to their clear inputs CL, and during sample frame 18 with the signals SAF18=1 and Ø3=1 the counters 1220 and 1221 are enabled by the output of an AND gate 1222 connected to enable inputs EN1, and are selectively enabled by the outputs of the gates 1216 and 1218 connected to enable inputs EN2, to count pulses of the clock 3MCK applied to their clock inputs CK. Thus during sample frame 18 the counter 1220 counts the number Na of active channels and the counter 1221 counts the number Nb of b.n. channels.

The counts Na and Nb of the counters 1220 and 1221 are applied to the inputs of a PROM 1223, which produces at its output signals X1 and X2 which represent the determined number of bits per word to be used in the next superframe. The signals X1 and X2 are clocked through D flip-flops 1224, under the control of the signal SUPDSI and the clock $\overline{3MCK}$ applied to an AND gate 1225, to produce the corresponding signals W1 and W2 which constitute the word length bits which are incorporated in the next DSI superframe as bits 5 and 6 of frame 1 as already described. The PROM 1223 also produces at its outputs differently coded but corresponding output signals which are clocked through D flip-flops 1226, under the control of the signal SUPSYNC and the clock $\overline{3MCK}$ applied to an AND gate 1227, to produce word-length signals 8B, 7B, and 6B which are supplied to the encoder and buffer 103. These various word length signals represent the determined number of bits per word according to the following table:

| No. of bits per word | X1 W1 | X2 W2 | 8B | 7B | 6B |
|---|---|---|---|---|---|
| 8 | 0 | 0 | 1 | 0 | 0 |
| 7 | 1 | 0 | 0 | 1 | 0 |
| 6 | 0 | 1 | 0 | 0 | 1 |

The PROM 1223 is programmed to determine the number Nc of channels which are to be transmitted continuously and the number Np of channels which are to be transmitted partially in dependence upon the counts Na and Nb, and to determine the number of bits per word from the numbers Nc and Np, as follows:

If Na≥29, then Nc=29, Np=0 (overload situation).

If 17≤Na<29, then Nc=Na, Np=Nb (normal situation).

If Na<17 and Na+Nb≥17, then Nc=17, Np=Na+Nb−17 (underload situation).

If Na+Nb<17, then Nc=17, Np=0 (severe underload situation).

Thus it can be seen that, in the overload situation, background noise channels are not transmitted and only 29 channels are continuously transmitted (i.e. when Na=Nc=29, there is a concentrated freeze-out of all channels which become newly active). In the underload situation, background noise channels are transmitted continuously to comply with the requirement that at least 17 channels are transmitted continuously. In the severe underload situation no channels are transmitted partially and the minimum number of 17 channels transmitted continuously is made up of, in order of priority, active channels, background noise channels, idle (on-hook) channels, and echo channels; if any echo channels have to be transmitted, their information is suppressed by being replaced by logic 0s.

If Nc+Np≤22, then 8 bits per word are used.

If Nc+Np>22 and Nc+½Np≤25, then 7 bits per word are used.

If Nc+½Np>25, then 6 bits per word are used.

Thus the number of bits per word is determined. Whilst the numbers Nc and Np are referred to above for convenience, these of course need not actually be produced in the PROM 1223.

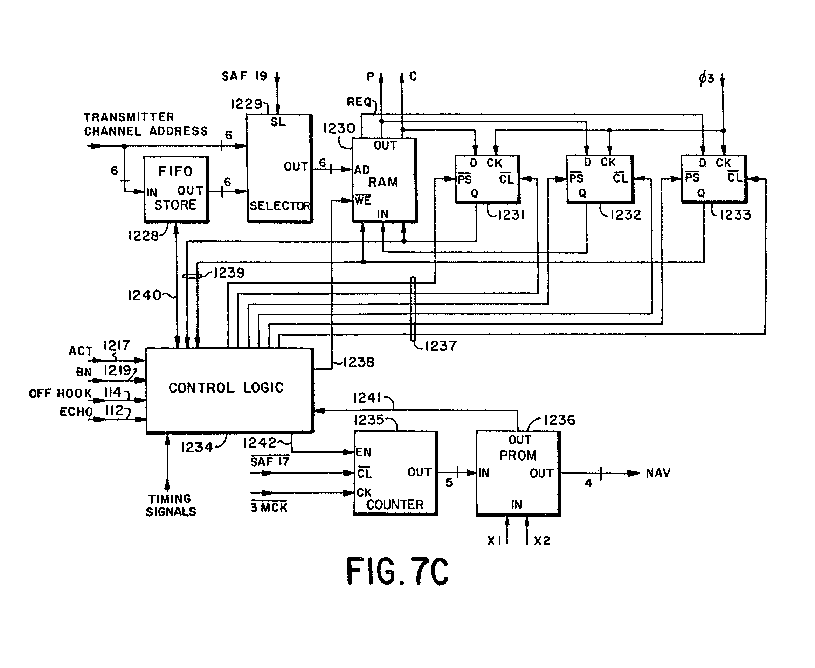

Fig. 7C illustrates parts of the assignment control unit 104 which serve to store and update the transmission status of the channels and to determine the number NAV of words in each of frames 2 to 28 on the DSI link which are available for the partial transmission of b.n. channels. The parts of the unit 104 shown in Fig. 7C comprise a first-in first-out queuing store 1228; an address selector 1229; a 48-channel by 3-bit RAM 1230; three D flip-flops 1231, 1232, and 1233 each having a data input D connected to a respective one of the three outputs of the RAM 1230, an output Q connected to the respective one of the three inputs of the RAM 1230, a clock input CK to which the signal $\emptyset$3 is supplied, a presetting input $\overline{PS}$, and a clear input $\overline{CL}$; a control logic unit 1234; a 5-bit counter 1235, and a PROM 1236.

The RAM 1230 stores for each channel the signals P and C already referred to, indicating the partial or continuous transmission status of each channel, and an additional signal REQ. The updating operation of this part of the assignment control unit takes place in sample frames 18 to 23 of each superframe. In each of these sample frames except sample frame 19 during which the operation is as described below, the selector 1229 supplies each channel address in turn to the address input AD of the RAM 1230, and with the signal $\emptyset$3=1 the prevailing signals C, P, and REQ for the channel are entered into the flip-flops 1231, 1232, and 1233 respectively. After possible modification of these signals by outputs of the control logic unit 1234 via lines 1237 connected to the presetting and clear inputs of the flip-flops, the signals C, P, and REQ for the channel are written back into the RAM by the control logic unit 1234 producing a logic 0 on a line 1238, connected to a write enable input $\overline{WE}$ of the RAM, with the signal $\emptyset$7=1.

The counter 1235 provides a count of the number of channels which have been assigned continuous transmission, i.e. for which C=1. This counter is cleared in sample frame 17 by the signal $\overline{SAF17}$ applied to its input $\overline{CL}$.

In sample frame 18, for each channel, with the signal $\emptyset$4=1, if the channel is active (the signal ACT=1 on line 1217) and the signals C=0 and REQ=0 are supplied from the flip-flops 1231 and 1233 respectively to the logic control unit 1234 via lines 1239, then via lines 1240 the logic control unit causes the channel address to be entered in the FIFO store 1228. Thus the addresses of newly active channels are entered in the store 1228. With the signal Ø6=1, via the lines 1237 for each channel the logic control unit 1234 sets the signal P=0 in the flip-flop 1232, sets the signal REQ=1 if the channel is active or REQ=0 if the channel is not active, in the flip-flop 1233, and sets the signal C=0 in the flip-flop 1231 if the channel is not active or if the count of the counter 1235 is not <29. Signals indicating whether the count of the counter 1235 is ≤17 and <29 are supplied from the PROM 1236, which is supplied with the count of the counter, to the control logic unit via lines 1241. With the signal Ø7=1, in addition to the new signals C, P, and REQ being written into the RAM 1229, for each channel for which C=1 the control logic unit 1234 enables the counter 1235, via a line 1242 connected to an enable input EN of the counter, to count one pulse of the clock 3MCK applied to its clock input CK.

In sample frame 19 the selector 1229 is switched by the signal SAF19 supplied to its select input SL to supply channel addresses read out of the store 1228 to the address input of the RAM 1230. Channel addresses stored in the store 1228 are read out therefrom in turn, until the store 1228' is empty, under the control of the unit 1234, via the lines 1240, each channel address being read out with the signal Ø7=1 only if the count of the counter 1235 is <29. With the following signal Ø3=1 the signals C, P, and REQ for the channel are entered into the flip-flops, with the signal Ø6=1 the signal C=1 is set in the flip-flop 1231, and with the signal Ø7=1 the new signals C, P, and REQ are stored in the RAM 1230, the counter 1235 is incremented, and if the count is still <29 the next channel address is read out from the store 1228. This continues until there are no more channel addresses stored in the store 1228 or the count of the counter 1235 reaches 29.

In sample frame 20, for each channel, if the channel is active, C=0, and the count of the counter 1235 is <29, then with the signal Ø6=1 the signal C=1 is set in the flip-flop 1231 and with the signal Ø7=1 the counter 1235 is incremented.

The above sequences ensure that all of up to 29 active channels, or the 29 longest active channels if more than 29 are active, are assigned continuous transmission (C=1, P=0).

In sample frame 21, for each b.n. channel (the signal BN=1 on the line 1219), if the count of the counter 1235 is <17 the signal C=1 is set in the flip-flop 1231 with the signal Ø6=1 and the counter 1235 is incremented with the signal Ø7=1, and if the count of the counter is ≥17 and <29 the signal P=1 is set in the flip-flop 1232 with the signal Ø6=1.

In sample frame 22, for each off-hook channel (the signal OFF HOOK=1 on the line 114), if the count of the counter 1235 is <17 the signal C=1 is set with the signal Ø6=1 and the counter is incremented with the signal Ø7=1. Similarly, in sample frame 23, for each echo channel (the signal ECHO=1 on the line 112), if the count of the counter 1235 is <17 the signal C=1 is set with the signal Ø6=1 and the counter is incremented with the signal Ø7=1.

These further sequences ensure that at least 17 channels in the desired order of priority, are assigned continuous transmission, and that if fewer than 29 channels are assigned continuous transmission then background noise channels (or at least those which have not been assigned continuous transmission in order to have 17 continuous channels) are assigned partial transmission (C=0, P=1).

Thus at the end of sample frame 23 the counter 1235 has a count of at least 17 and not more than 29, representing the number of channels assigned continuous transmission in the next superframe. This count, and the signals X1 and X2 representing the determined number of bits per word, are supplied to inputs of the PROM 1236 which produces at its output the resultant number NAV of words available in each of frames 2 to 28 of the following DSI superframe for the partial transmission of b.n. channels. This number NAV can be from 0 (no partial transmission) to 12.

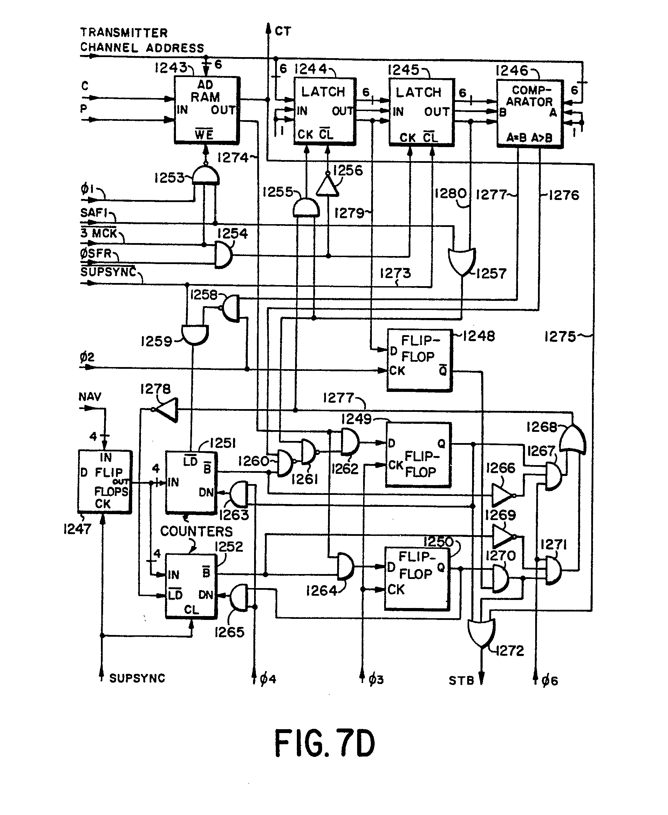

Fig. 7D illustrates a cyclic assignment unit of the assignment control unit 104, for producing a signal STB which is supplied to the encoder and buffer 103 in Fig. 1. The signal STB=1 is produced in synchronism with the relevant channel address, whenever an information word of a channel is to be transmitted. Thus for each channel which is to be transmitted continuously, the signal STB=1 must be produced for the channel in each sample frame. For each channel which is to be transmitted partially, the signal STB=1 must be produced for the channel in only those sample frames for which the channel's information is to be transmitted. The cyclic assignment unit consists of a 48-channel by 2-bit RAM 1243, two 8-bit latches 1244 and 1245, an 8-bit comparator 1246, D flip-flops 1247, 1248, 1249, and 1250, two 4-bit down counters 1251 and 1252, and gates and inverters 1253 through 1272 and 1278.

The operation of the cyclic assignment unit is best understood by considering a specific example. For example, it is assumed that for a particular superframe it has been determined that 26 active channels are to be transmitted continuously and 5 b.n. channels are to be transmitted partially. Then 6 bits per word will be used, and NAV=29−26=3 words will be available in each of the DSI frames 2 to 28 for the partial transmission of the b.n. channels. Suppose that these b.n. channels have the channel addresses equivalent to 5, 10, 20, 30, and 40.

At the start of the superframe, the signal SUPSYNC clocks the number NAV into the flip-flops 1247 and clears the counter 1252 via its clear input CL, and the latch 1245 is cleared by the signal $\overline{\text{SUPSYNC}}$ being applied to its clear input $\overline{\text{CL}}$ via a line 1273. The signal $\overline{\text{SUPSYNC}}$ is also conducted via the gate 1259 to the load input $\overline{\text{LD}}$ of the counter 1251, which is therefore loaded with the number NAV=3 from the flip-flops 1247.

During sample frame 1 the signal SAF1=1 enables the gate 1253 whose output is connected to the write enable input $\overline{\text{WE}}$ of the RAM 1243. Consequently, for each channel address, the signals C and P of the channel applied to inputs of the RAM 1243 are written into the RAM with the signals $\emptyset1$=1 and the clock $\overline{\text{3MCK}}$=1, are available at the outputs of the RAM as a signal CT and a signal on a line 1274, respectively. The signal CT is supplied to the encoder and buffer 103 in Fig. 1 and also via a line 1275 to the OR gate 1272 whose output is the signal STB. Thus for each channel for which C=1, in each frame the signal CT=1 and hence the signal STB=1 is produced to provide for continuous transmission of the channel.

The comparator 1246 compares the 8-bit output of the latch 1245 (input B) with the 6-bit channel address supplemented by most-significant bits which are logic 1 (input A), and consequently produces a logic 1 on a line 1276 via its output A>B. At this time the borrow outputs $\overline{\text{B}}$ of the counters 1251 and 1252 are respectively 1 and 0, because the counters have respectively non-zero and zero counts. Consequently the gate 1260 produces a 0 output so that the gate 1261 produces a 1 output to enable the gate 1262, and the gate 1264 is inhibited. When the channel address is 5, i.e. for the first b.n. channel, the stored signal P=1 produces a 1 on the line 1274, and hence a 1 at the output of the gate 1262, so that with the signal $\emptyset3$=1 the flip-flop 1249 is set so that its output Q=1. This output is connected to the OR gate 1272 so that the signal STB=1 is produced, and also enables the gate 1263 so that with the signal $\emptyset4$=1 the count of the counter 1251 is reduced by 1, to 2, via its input DN. For the next channel P=0, so that the output of the gate 1262 returns to 0, the flip-flop 1249 is reset, and the signal STB=0 is produced.

The signal STB=1 is similarly produced for the channel addresses 10 and 20. With the channel address 20 and the signal $\emptyset4$=1 the count of the counter 1251 is reduced to 0 so that its $\overline{\text{B}}$ output becomes 0 to enable the gate 1267 via the inverter 1266. In consequence, with the signal $\emptyset6$=1 the gate 1267 produces a 1 output, so that the gate 1268 also produces a logic 1 on a line 1277. As the signal SAF1=1 is conducted via the OR gate 1257 to enable the gate 1255, the logic 1 on the line 1277 is conducted via this gate to the clock input CK of the latch 1244 to cause the current channel address, 20, and two most significant 1 bits, to be entered into the latch 1244. This latched channel address is referred to as the latch point. The logic 1 on the line 1277 is inverted by the inverter 1278 whose output is connected to the load input $\overline{\text{LD}}$ of the counter 1252, which is consequently loaded with the count NAV=3 so that its output $\overline{\text{B}}$ becomes 1 to enable the gate 1264. The logic 0 row produced at the output $\overline{\text{B}}$ of the counter 1251 inhibits the gate 1260, so that the gate 1261 produces a 0 output to block the gate 1262.

With the next signal $\emptyset2$=1, the most significant bit 1 now present in the latch 1244 and produced on a line 1279 is clocked into the flip-flop 1248, whose output $\overline{\text{Q}}$ consequently becomes 0 to block the gate 1270. When the channel address reaches 30, i.e. for the next b.n. channel, the 1 on the line 1274 sets the flip-flop 1250 which via the gate 1265 causes the count of the counter 1252 to be reduced by 1 to 2, but because the gate 1270 is blocked the signal STB is 0, i.e. this channel is not transmitted in respect of this sample frame. The same situation occurs for the channel address 50, the count of the counter 1252 being reduced to 1.

At the start of the second sample frame the output of the gate 1254 becomes 1 to clock the contents of the latch 1244, i.e. the latch point, into the latch 1245 and to clear the latch 1244 via the inverter 1256. The most significant bit output of the latch 1245, present on a line 1280, is therefore 1 so that the output of the gate 1257 is 1. The line 1279 becomes 0 so that with the next signal $\emptyset2$=1 the flip-flop 1248 is reset and the gate 1270 is enabled. The comparator outputs on the lines 1276 and 1277 ars both 0 because the current channel address is initially less than the latch point, input B of the comparator.

With the channel address 5, the signal on the line 1274 becomes 1 to set the flip-flop 1250 and reduce the count of the counter 1252 to 0. The Q=1 output of the flip-flop 1250 is now conducted via the gate 1270 to enable the gate 1271 and to produce the signal STB=1 via the gate 1272. The output $\overline{\text{B}}$ of the counter 1252 is now 0 so that the gate 1271 produces a 1 output to produce a 1 on the line 1277 via the OR gate 1268. In the same manner as described above, this causes the counter 1252 to be loaded with the count NAV=3, the current channel address, 5, to be loaded into the latch 1244 as a new latch point, and the flip-flop 1248 to be set to block the gate 1270. Consequently the signal STB=1 is not produced for the channel address 10.

When the channel address reaches 20, the comparator 1246 determines that A=B and produces a 1 on the line 1277. With the signal $\emptyset2$=1, the gate 1258 now produces a 0 output which via the gate 1259 causes the count NAV=3 to be loaded into the counter 1251, so that its output $\overline{\text{B}}$ becomes 1. The signal STB=1 is not produced for this channel address, however, because the signal on the line 1276 is still 0 to block the gate 1260. For each of the channel addresses 30 and 40 the signal on the line 1276 is 1 so that in each case the signal STB=1 is produced and the count of the counter 1251 is reduced by 1, so that at the end of sample frame 2 the counter 1251 has a count of 1.

At the start of sample frame 3 the latch point, 5, is entered into the latch 1245 and the latch 1244 is cleared, so that the flip-flop 1248 is reset. For the channel address 5 the signals on the lines 1277 and 1276 are respectively 1 and 0, so that the counter 1251 is loaded with the count NAV=3 and the signal STB=0 is produced. For the channel addresses 10, 20, and 30 the signal STB=1 is produced and the count of the counter 1251 is reduced by 1 each time to reach 0, so that the latch point 30 is entered into the latch 1244 and the counter 1252 is loaded with the count NAV=3. The operation of the unit in the remainder of the superframe continues as described above.

It can be seen, therefore, that in the successive sample frames the signal STB=1 is produced for the following b.n. channel addresses, and hence in the subsequent frames of the DSI superframe the following channels are transmitted:—

| Sample frame | Background noise channel |
|---|---|
| 1 | 5, 10, 20 |
| 2 | 5, 30, 40 |
| 3 | 10, 20, 30 |
| 4 | 5, 10 40 |
| 5 | 20, 30, 40 |
| . | . |
| . | . |
| . | . |

Thus the b.n. channels are transmitted by cyclic assignment. A similar cyclic assignment unit in the receiver keeps track of which channels are being transmitted in which frames. In the receiver, in each frame, the information of b.n. channels which have not been transmitted is constituted by repeating the previously transmitted information for that channel, i.e. by zero-order prediction, or by zero substitution or linear prediction.

The manner of operation of the cyclic assignment unit for other combinations of b.n. channels and quantities NAV will be clear from the preceding description. In this respect it will be noted that, in the special case when Np≤NAV, each b.n. channel will be transmitted in each of frames 2 to 28 of the DSI superframe. However, for convenience of description this special case is still regarded as being a partial transmission situation, not a case of continuous transmission.

Encoder and buffer

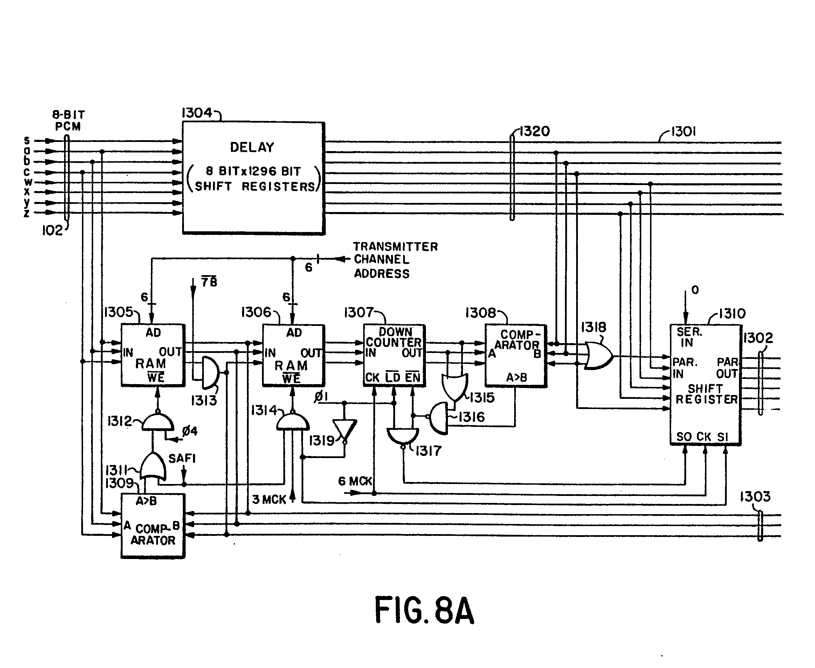

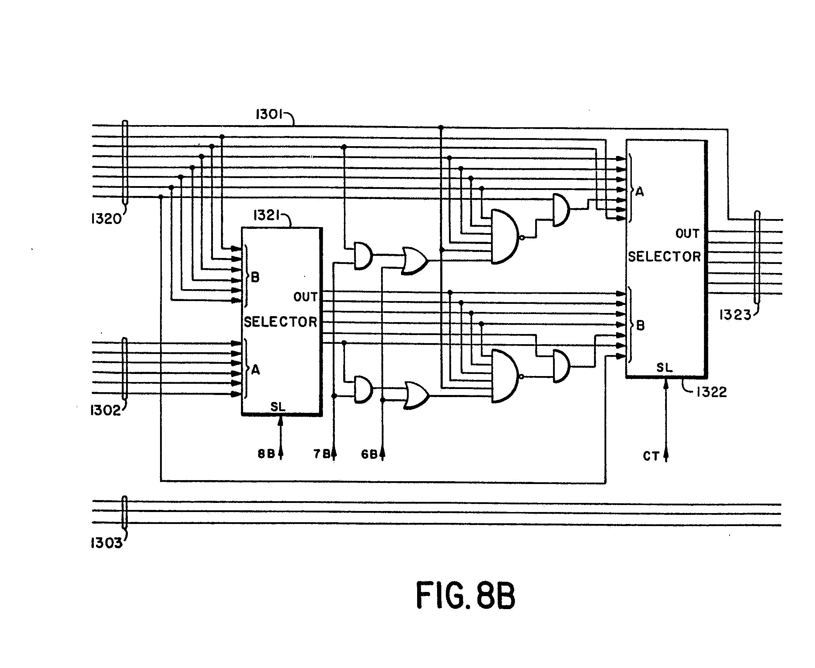

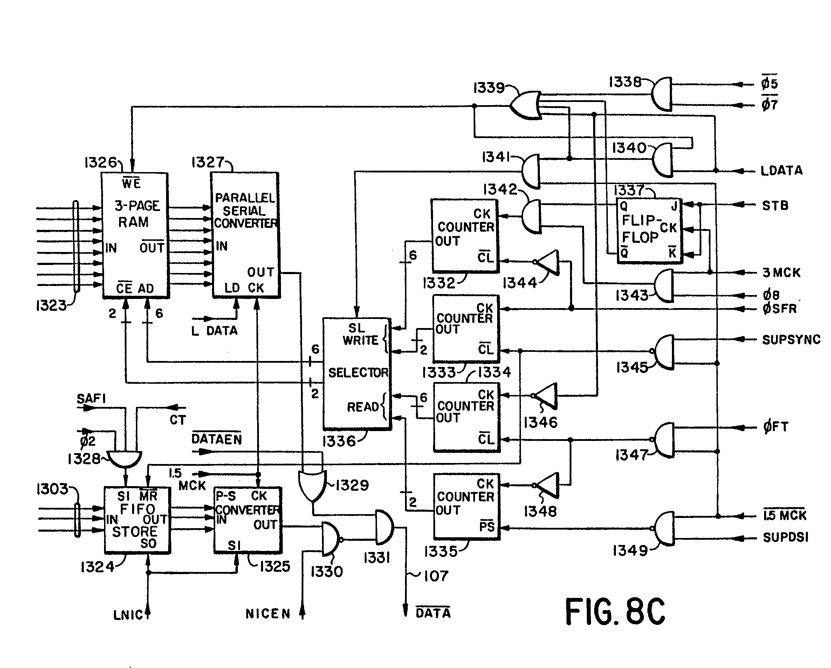

The encoder and buffer 103 is illustrated in detail in Figs. 8A, B, and C, Fig. 8A illustrating an NIC encoder, Fig. 8B illustrating selection and zero code suppression circuits, and Fig. 8C illustrating buffer and control circuits. Referring to Fig. 8A, the encoder serves to encode 8-bit PCM information present on the lines 102 into, selectively, 6- or 7-bit NIC information of which the sign bit is produced on a line 1301, the remaining 5 or 6 bits are produced on six lines 1302, and related 3-bit maximum segment information is produced on three lines 1303. The encoder has a similar form to the 6-bit NIC encoder described in Duttweiler et al U.S. Patent No. 3,945,002 issued March 16, 1976, except that it is selectively operable for 6 or 7 bit NIC encoding.

The encoder consists of a delay unit 1304, which is constituted by 8 1296-bit-long shift registers and provides a delay of 1 superframe, two 48-channel by 3-bit RAMs 1305 and 1306, a 3-bit down counter 1307, two 3-bit comparators 1308 and 1309, a shift register 1310, gates 1311 through 1318, and an inverter 1319.

With the signal $\emptyset 4=1$ in sample frame 1 of each superframe, via the gates 1311 and 1312 the RAM 1305 is enabled to store the three most significant bits, other than the sign bit, of the 8-bit PCM word on the lines 102 for each channel. As is known, each 8-bit PCM word comprises a sign bit s, three segment information bits a, b, and c, and four interval bits w, s, y, and z. Accordingly, in sample frame 1 the segment information of each channel is entered into the RAM 1305. Assuming initially that the signal $\overline{7B}$ is 1 so that the AND gate 1313 is enabled for each channel, in each other sample frame of the superframe the stored segment information is compared in the comparator 1309 with the current segment information of the channel and, if the latter is greater, this is written into the RAM 1305. At the end of the superframe, therefore, the maximum segment information of each channel during the superframe is present in the RAM 1305, and for each channel this information is entered into the RAM 1306 in sample frame 1 of the next superframe with the signal $\emptyset 1=1$.

During each sample frame of this next superframe, for each channel, with the signal $\overline{\emptyset 1}=1$ the maximum segment information is loaded into the down counter 1307 whose count is compared by the comparator 1308 with the actual segment information of the channel which, being part of the delayed 8-bit PCM information on lines 1320, has been delayed by one superframe by the delay unit 1304. With the signal $\emptyset 1=1$ the mode control inputs S0 and S1 of the shift register 1310 are both 1 to cause the information at the parallel inputs of the register to be loaded into the register. This information is constituted by the output of the gate 1318, the delayed interval information bits w, x, y, and z of the channel, and the delayed bit c of the channel. If the count, initially equal to the maximum segment information, in the counter 1307 is greater than the actual segment information and has a 1 in either of its two most significant bit positions, then the gate 1316 produces a 0 output to enable counting of the counter 1307. At the same time, shifting of the shift register 1310 is enabled by its mode control inputs S0 and S1 being respectively 1 and 0, the signal $\overline{\varnothing 1}$ now being 1. Accordingly, the counter 1307 counts down pulses of the clock 6MCK, and shifting (in a downward direction as illustrated in Fig. 8A) is simultaneously effected in the shift register 1310, until the output of the gate 1316 becomes 1 when further counting and shifting are inhibited.

The above 6-bit NIC encoding operation has been described only briefly, since it is known and described more fully for example in U.S. Patent No. 3,945,002 already referred to. The 6-bit NIC encoding, and corresponding decoding in the receiver, is effected in accordance with the table given in Fig. 4 of that patent. In the case of 7-bit NIC encoding, the signal $\overline{7B}=0$ so that the output of the AND gate 1313 is always 0. Thus the least significant bit of the 3-bit maximum segment information is always 0 in this case. Apart from this, the operation of the encoder is described above. The encoding and decoding operations in this case are illustrated by the following table:—

| Maximum segment information | 8-bit PCM word | 7-bit NIC word | Reconstructed 8-bit PCM word |
|---|---|---|---|
| 11(0) | s111wxyz<br>s110wxyz<br>s101wxyz<br>s100wxyz<br>s011wxyz<br>s010wxyz<br>s001wxyz<br>s000wxyz | s1wxyz1<br>s1wxyz0<br>s01wxyz<br>s001wxy<br>s0001wx<br>s00001w<br>s000001<br>s000000 | s111wxyz<br>s110wxyz<br>s101wxyz<br>s100wxy1<br>s011wx10<br>s010w100<br>s0011000<br>s0001000 |
| 10(0) | s101wxyz<br>s100wxyz<br>s011wxyz<br>s010wxyz<br>s001wxyz<br>s000wxyz | s1wxyz1<br>s1wxyz0<br>s01wxyz<br>s001wxy<br>s0001wx<br>s0000wx | s101wxyz<br>s100wxyz<br>s011wxyz<br>s010wxy1<br>s001wx10<br>s000wx10 |
| 01(0) | s011wxyz<br>s010wxyz<br>s001wxyz<br>s000wxyz | s1wxyz1<br>s1wxyz0<br>s01wxyz<br>s00wxyz | s011wxyz<br>s010wxyz<br>s001wxyz<br>s000wxyz |
| 00(0) | s001wxyz<br>s000wxyz | s1wxyz1<br>s0wxyz0 | s001wxyz<br>s000wxyz |

Referring now to Fig. 8B, the selection and zero code suppression circuits comprise two selectors 1321 and 1322, each of which has groups of inputs A and B and a select input SL. Each selector connects its A inputs to its outputs of its input SL=0 and connects its B inputs to its outputs of its input SL=1. The selector 1321 has the signal 8B applied to its input SL, and the selector 1322 has the signal CT applied to its input SL. The zero code suppression circuitry is constituted by the gates shown in Fig. 8B but not referenced; these gates are controlled by the signals 7B and 6B and provide for zero code suppression by ensuring that, in each word, the least significant code bit is set to 0 if all of the bits of the word are 1. The connections of the lines 1320 to the inputs A of the selector 1322 are arranged to provide for the partial transmission of channels with 7 or 6 bits to be in compact PCM (CPCM) format, in which the second bit, or second and third bits, respectively, of the PCM word are not transmitted and set to 0 in the receiver.

From the illustration in Fig. 8B and the above description it will be appreciated that for partially transmitted channels (CT=0), and for continuously transmitted channels (CT=1) when 8 bits per word are used, the delayed PCM information on the lines 1320 is coupled to the output lines 1323, and for continuously transmitted channels (CT=1) when 6 or 7 bits per word are used (the signal 8B=0) the sign bit on the line 1301 and the NIC information on the lines 1302 are coupled to the output lines 1323.

The buffer and control circuits illustrated in Fig. 8C serve to buffer the information on the lines 1303 and 1323 which is to be transmitted to the timing of the DSI superframe. To this end, the circuits in Fig. 8C comprise a first-in first-out (FIFO) store 1324 and a 3-bit parallel-to-serial converter 1325 for the NIC segment information on the lines 1303, a 3-page inverting RAM 1326 and an 8-bit parallel-to-serial converter 1327 for the information on the lines 1323, and associated gates 1328 through 1331. The circuits also comprise a 6-bit write address counter 1332, a 2-bit write page counter 1333, a 6-bit read address counter 1334, a 2-bit read page counter 1335, an 8-bit page and address selector 1336, a flip-flop 1337, and gates and inverters 1338 through 1349.

In each superframe, in sample frame 1 (SAF1=1) for each continuous channel which is to be transmitted (CT=1), with the signal $\emptyset2=1$ the gate 1328 supplies a 1 to an input-enable input SI of the store 1324, to cause the 3-bit maximum segment information of the channel on the lines 1303 to be entered into the store. In frame 1 of the DSI superframe, with the signal LNIC shown in Fig. 3 applied to an output-enable input SO of the store 1324 and to an input-enable input SI of the converter 1325, the 3-bit maximum segment information of each channel to be continuously transmitted, in turn, is transferred from the store 1324 to the converter 1325, into which it is loaded in parallel form and where it is converted into serial form under the control of the clock 1.5MCK applied to a clock input CK of the converter. The serial information at the output of the converter 1325 is inverted by the gate 1330, which is enabled by the signal NICEN=1 at this time, and conducted via the gate 1331 to the line 107 and thence to the signal combiner 105 in Fig. 1, the gate 1331 being enabled at this time by the signal $\overline{DATAEN}=1$ conducted via the gate 1329.

Writing into and reading from the RAM 1326 are effected in dependence upon the output of the gate 1339 at a page and address of the RAM determined by the counts of the write counters 1332 and 1333 and the read counters 1334 and 1335, the respective counts being selectively applied to a chip enable input $\overline{CE}$ of the RAM for page selection and an address input AD of the RAM for address selection via the selector 1336 which is controlled via its select input SL by the output of the gate 1341.

Writing into the RAM 1326 is effected if the output of the gate 1339 is 0. This is the case for each channel in each sample frame when $\overline{\emptyset5}=0$ or $\overline{\emptyset7}=0$, if the signal STB=1 has been produced for the channel and if the signal LDATA=0. It will be recalled that the signal STB=1 is produced whenever an information word of a channel in the current sample frame is to be transmitted. The production of this signal sets the flip-flop 1337, so that its output

$\overline{Q}=0$. When the output of the gate 1339 is 0 for write-in, the gates 1340 and 1341 consequently also have 0 outputs so that the selector 1336 supplies to the RAM the write page and address from the counters 1333 and 1332 respectively. After each write-in, with the output Q=1 from the flip-flop 1337 and the signal $\emptyset8=1$ applied to the gate 1343, the count of the counter 1332 is increased by one via the gate 1342. At the end of each sample frame, with the signal $\emptyset SFR=1$, the counter 1332 is cleared via the inverter 1344 and the page counter 1333 is incremented.

The signal LDATA controls reading from the RAM 1326. Throughout the first frame of the DSI superframe the signal LDATA=0, this frame being provided for the overhead information as already described. In each of frames 2 through 28 of the DSI superframe the signal LDATA has one of the forms shown at the bottom of Fig. 3, the timing signal generator 123 in Fig. 1 producing the signal LDATA with 22, 25, or 29 evenly spaced pulses in each frame depending upon the number of bits per word, 8, 7, or 6 respectively which the assignment control unit 104 has determined be used throughout the superframe. With the signal LDATA=1, via the gate 1339 the RAM is controlled for reading and via the gates 1340 and 1341 the selector 1336 is caused to supply the read page and address from the counters 1334 and 1335 to the RAM. The signal LDATA is also supplied to a load input LD of the converter 1327 so that the 8 bits which are read out in inverted form from the RAM 1326 are entered into the converter 1327, at the output of which they are produced serially under the control of the clock 1.5MCK and conducted via the gates 1329 and 1331 to the line 107. If 8 bits per word are being used, all 8 bits will be conducted to the line 107. However, if only 7 or 6 bits per word are being used, then loading of the next word into the converter 1327 in response to the next signal LDATA=1 occurs after only 7 or 6 bits, respectively, have been produced at the output of the converter 1327.

The read address counter 1334 is incremented after each signal LDATA=1 via the inverter 1346. At the end of each frame of the DSI superframe, with the signal $\emptyset FT=1$, the counter 1334 is cleared by the output of the gate 1347 and the read page counter is incremented via the inverter 1348. The page counters 1333 and 1335 count cyclically each through three states to select one of the three pages of the RAM 1326 in turn. In order to maintain a proper spacing between the irregular writing into and reading from the RAM, via the gate 1345 the counter 1333 is cleared with the signal SUPSYNC=1 at the start of each superframe, so that it selects the first, second, and third pages of the RAM sequentially in turn. In contrast, with the signal SUPDSI=1 at the start of each DSI superframe, via the gate 1349 the counter 1335 is preset to a fourth state in which no page of the RAM is selected. This inhibits reading from the RAM in the first frame of the DSI superframe. The signal $\emptyset FT=1$ causes the counter 1335 to select the first, second, and third pages of the RAM sequentially in turn throughout the remaining 2nd to 28th frame of the DSI superframe.

Output signal combiner

The output signal combiner 105 in Fig. 1 serves to combine the signals on the lines 106, 107, and 108, and to this end can be constituted simply by appropriate gating circuitry. The combiner also serves to produce and combine with these signals the signalling, error-checking, and alarm indication bits already referred to, and to convert the DSI signal into a bipolar form suitable for transmission. As signal combining circuits providing these functions are well known to those skilled in the art, no further description thereof is believed to be necessary here.

Receiver

A block diagram of a DSI receiver which can be used in co-operation with a transmitter as described above is shown in Fig. 9. The receiver comprises an interface and timing extractor unit 1401, a decoder 1402, an assignment store 1403, a signalling information control unit 1404, a data buffer 1405, an offset remover and averaging circuit 1406, and two desynchronizers 1407 and 1408, one for each of the two digroups. The received DSI signal is supplied via a line 1409 to the unit 1401, which produces timing signals for supply to the other units of the receiver via lines 1410, and extracts destuffing information and supplies this via lines 1411 to the desynchronizers. The unit 104 extracts the signalling bits from the DSI signal and supplies these via lines 1412 to the desynchronizers. Data in the DSI signal is decoded by the decoder 1402 and assignment information is extracted from the DSI signal and stored by the assignment store 1403, and from the decoded data and assignment information the data of the two digroups is reconstructed by the data buffer 1405. The data output from the buffer 1405 is separated into the two digroup outputs by the desynchronizers 1407 and 1408, which also effect destuffing and reconstruct the clock frequencies corresponding to the digroup inputs to the transmitter. The circuit 1406 produces the receiver average RA for each channel in the same manner as the corresponding circuit 116 in the transmitter, and the sign bit of each channel is supplied to the transmitter directly from the output of the data buffer 1405.

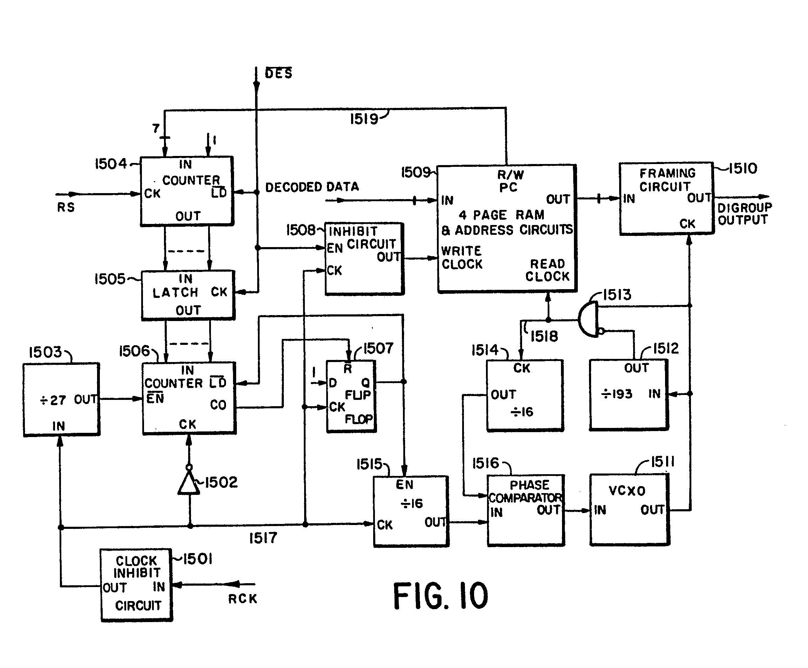

As the operation of the transmitter has been described fully, and the receiver operates conversely, a detailed description of all of the parts of the receiver is not included here. However, the manner in which reconstruction in the receiver of the clock frequency for each digroup is achieved is not apparent from the operation of the transmitter, and accordingly this is described below with reference to Fig. 10. This reconstruction for each digroup entails establishing frequency synchronism between the digroup input to the transmitter and the digroup output from the receiver, and is rendered difficult by the relatively low stuffing rate.

Referring to Fig. 10, the receiver includes a clock inhibit circuit 1501, an inverter 1502, and a $\div 27$ frequency divider 1503 which are common to the two desynchronizers 1407 and 1408. The remaining parts shown in Fig. 10 are provided individually in each of the desynchronizers. These remaining parts comprise a counter 1504; a programmable frequency divider constituted by a latch 1505, a counter 1506, and a D flip-flop 1507; a clock inhibit circuit 1508; a 4-page RAM, associated read and write address circuits, and a read/write phase comparator, shown as a single unit 1509; a digroup framing circuit 1510; a voltage-controlled crystal oscillator (VCXO) 1511; a $\div 193$ frequency divider 1512; a gate 1513; two $\div 116$ frequency dividers 1514 and 1515; and a phase comparator 1516.

The unit 1401 in Fig. 9 produces a clock signal RCK, having the nominal DSI clock frequency of 1.544 MHz, a signal RS which comprises one pulse per superframe, and a destuffing command $\overline{DES}=0$ whenever destuffing is to be effected for the relevant digroup in the current superframe. The signal RCK is applied to the clock inhibit circuit 1501, which inhibits 24 clock pulses per superframe to provide on a line 1517 a clock signal CLK having $5208-24=5184$ pulses per superframe, or an average frequency of

$$1.544 \times 5184/4208 = 1.536885 \text{ MHz}.$$

Via its enable input $\overline{EN}$ and the $\div 27$ frequency divider 1503, the counter 1506 is enabled to count only 1 in 27 of the pulses of the signal CLK, and thus counts pulses at an average frequency of

$$1.536885 \text{ MHz} \div 27 = 56922 \text{ Hz}.$$

The frequency division factor, 27, of the frequency divider 1503 is selected to be equal to the number of sample frames in a superframe.

The signal CLK on the line 1517 is applied to the clock input CK of the clock inhibit circuit 1508, via which it is conducted unchanged when the signal $\overline{DES}=1$ to the unit 1509 to control the write into the RAM of the decoded data for the relevant digroup supplied from the output of the data buffer 1405. With each destuffing command $\overline{DES}=0$ the clock inhibit circuit 1508 is inhibited throughout the first frame of the superframe, this always being the stuffed frame, so that stuffed information is not written into the RAM. A reconstructed 1.544 MHz clock signal produced by the VCXO 1511

is supplied to a clock input CK of the framing circuit 1510, and is also supplied to the input of, and gated in the gate 1513 with the output of, the ÷193 frequency divider 1512, to produce at the output of the gate 1513 and on a line 1518 a reconstructed 1.536 MHz clock signal which controls read-out of the information stored in the RAM to the framing circuit 1510.

The required frequency synchronism of the VCXO 1511 is achieved by comparing in the phase comparator 1516 the phases of the outputs of the ÷16 frequency dividers 1514 and 1515, and controlling the frequency of the VCXO with the output of the phase comparator. The frequency divider 1514 frequency-divides the reconstructed clock signal on the line 1518 by 16 to produce an output signal at a nominal frequency of 96,000 Hz. The ÷16 frequency divider 1515 is arranged to frequency-divide the signal CLK on the line 1517 when it is enabled by the output Q of the flip-flop 1507. On average, the signal CLK has a frequency of 1536885 Hz and, as described below, the divider 1515 is arranged to be disabled at an average frequency of 885 Hz, so that the output of the divider is at an average frequency of (1536885—885)/16=96000 Hz. In this average steady state, in which the phase comparator 1516 is supplied with inputs at the same frequency, there is no change in the VCXO frequency.

As already described, the unit 1509 includes a read/write phase comparator which, depending on the relative phases of reading from and writing into the RAM, produces a logic 1 or 0 at an output R/W PC and hence on a line 1519. The counter 1504 is a presettable 8-bit counter, to the 7 most significant presetting inputs of which the line 1519 is connected and to the least significant presetting input of which a logic 1 is supplied. The signal DES is supplied to a load input LD of the counter 1504, and the signal RS is supplied to its clock input CK. Thus with each destuffing command DES=0 the counter is preset to the count 00000001 or 11111111 depending on the prevailing read/write phase in the RAM. Between successive destuffing commands the counter 1504 counts up pulses of the signals RS; i.e. the counter counts the number of superframes, modified by plus or minus 1 depending on the RAM read/write phase, between consecutive destuffing commands. Also with each destuffing command the latch 1505 is clocked to store the count reached by the counter 1504. The units 1505, 1506, and 1507 operate in known manner as a programmable frequency divider which divides the frequency of 56922 Hz by a factor constituted by the count stored in the latch 1505, to produce at the Q output of the flip-flop 1507 the signal at an average frequency of 885 Hz for disabling the frequency divider 1515.

It will be recalled that, on average and based on nominal figures, there are 64.5 superframes between successive frame stuffings. Since only the first frame in each superframe can be stuffed, in fact consecutive frame stuffings may occur 64 or 65 superframes apart. The modified count reached by the counter will therefore be from 63 to 66. The output frequency of the programmable frequency divider will therefore be 56922/63, 64, 65, or 65 Hz, or in the range from 862 to 903 Hz. On average, over a large number of successive frame stuffings, this frequency will be the 885 Hz referred to above so that a stable situation is reached.

In practice, it will be appreciated that the frequency of the VCXO will be stepped between different frequencies as a result of the variable frequency of the signal supplied from the flip-flop 1507 to the frequency divider 1515, each step occurring on the occurrence of a destuffing command. Typically the VCXO frequency may change by an absolute maximum of 64 Hz with a minimum duration of any particular frequency of 170 ms. This frequency jitter, together with a maximum of about 120 ns rms jitter due to the internal jitter of the desynchronizer, is believed to be insufficient to affect subsequently connected equipment such as channel banks, multiplexers, and digital switches.

The invention is of course not limited to the particular embodiment described above. In particular, and not by way of limitation, it is mentioned here that the invention is applicable to other timing, frame, and superframe formats, and to other encoding schemes. As just one example of such variations, it is observed that, instead of transmitting background noise channels partially by cyclic assignment using compact PCM encoding, as described above, they could be transmitted continuously with a reduced number of bits per word, for example using only one or two bits per word using adaptive PCM encoding. Numerous other possible variations will be self-evident to persons skilled in the art and to which the invention relates.

**Claims**

1. A method of mitigating noise signal contrast in a multi-channel digital speech interpolation transmission system, comprising the steps of:—

determining (104) each channel which is active and each channel which carries background noise; and
transmitting (103, 104) the active channels; characterized by transmitting the channels which carry background noise with a resolution which is dependent upon the number of channels transmitted and which is reduced as said number is increased.

2. A method as claimed in claim 1 characterized in that said determining step comprises, for each channel, the steps of:—

detecting (109) speech signals on a transmit path of the channel;
determining (113) whether the channel is in an off-hook state;
detecting (111) echoes on the transmit path of speech signals on a receive path of the channel;
determining (104) that the channel is active if speech signals which are not echoes are detected on the transmit path and the channel is in the off-hook state; and
determining (104) that the channel carries background noise if speech signals are not detected on the transmit path and the channel is in the off-hook state.

3. A method as claimed in claim 2 characterized in that, for each channel, the step of determining (113) whether the channel is in the off-hook state comprises the steps of:—

detecting (1101) speech signals on the receive path of the channel; and
determining that the channel is in the off-hook state in dependence upon the detection of speech signals on the transmit and receive paths during a preceding predetermined period.

4. A multi-channel digital speech interpolation transmission system for transmitting a plurality of digital signal channels via a transmission link, comprising means (104) for determining each channel which carries background noise (b.n. channel) and each channel which is active: characterized by means (103, 104) for transmitting, in addition to each active channel, each channel which carries background noise with a resolution which is dependent upon the number of channels transmitted and which is reduced as said number is increased.

5. A system as claimed in claim 4 and comprising means (123) for forming superframes each comprising a plurality of multi-bit frames, characterized in that the transmitting means comprises:—

means (103, 104) for transmitting a digital message in respect of each active channel in each of said frames of the superframe and digital messages in respect of the b.n. channels in said frames of the superframes;
means (1223) for determining for each superframe, in dependence upon the numbers of active channels and b.n. channels for that superframe, numbers of bits for the digital messages of each active channel and each b.n. channel;
means (103) for producing said digital messages, each of the respective number of bits, from the digital signals of each active channel and each b.n. channel; and

means (Fig. 7A; 1224, 1324, 1325) for producing and transmitting, for each superframe, digital information relating to the transmission status of each channel, and the determined number of bits of each of the digital messages, in that superframe.

6. A system as claimed in claim 5 characterized in that said means (123) for forming superframes is arranged to form each superframe with an additional, overhead information frame in addition to said plurality of frames, said digital information being transmitted in said overhead information frame of each superframe.

7. A system as claimed in claim 6 characterized in that the means (1223) for determining numbers of bits for the digital messages serves to determine a number of bits which is common to all of the digital messages in the relevant superframes, whereby a predetermined number of the digital messages each with the determined number of bits can be transmitted in each of said plurality of frames of the relevant superframe, said predetermined number being greater than the number of active channels, and wherein the means (103, 104) for transmitting the digital messages comprises means (Fig. 7D) for transmitting the digital message of each active channel in each of said plurality of frames of the relevant superframe and for transmitting the digital messages of b.n. channels in the remaining available space in each of said plurality of frames, the transmission being effected cyclically for the b.n. channels throughout said plurality of frames of the relevant superframe.

8. A system as claimed in claim 7 characterized in that the means (103) for producing the digital messages of each active channel from the digital signals of the channel comprises a nearly instantaneous companding (NIC) encoder (Fig. 8A) for encoding the digital signals of each active channel in each superframe to produce a maximum segment digital value and a plurality of NIC encoded values, each NIC encoded value constituting a respective one of the digital messages of the active channel, and wherein the means (Fig. 7A, 1324, 1325) for producing and transmitting said digital information comprises means (1324, 1325) for transmitting the maximum segment digital value of each active channel in the overhead information frame of the relevant superframe.

9. A system as claimed in claim 7 characterized in that the means (103) for producing the digital messages of each b.n. channel from the digital signals of the channel comprises means (Figs. 8B, 8C) for omitting one or more most significant magnitude bits from each digital signal to produce the respective digital message.

10. A system as claimed in claim 7 characterized in that said means (103, 104) for transmitting is responsive to an overload situation, in which the number of active channels is equal to or greater than the predetermined number of digital messages which can be transmitted in each of said plurality of frames with a predetermined minimum number of bits for each digital message, to transmit in the relevant superframe only said predetermined number of active channels with each digital message thereof having said predetermined minimum number of bits, b.n. channels not being transmitted in the superframe.

11. A system as claimed in claim 5 wherein said plurality of digital signal channels to be transmitted are derived from at least one source which is asynchronous to the timing of the transmission system, said system being characterized by further comprising, for each such source, synchronizing means (101) comprising:—

a store (405);
means (404, 411, 408) for writing the digital signals of the channels from the source sequentially into the store;
means (123, 414, 408) for reading the digital signals of the channels sequentially from the store at a higher rate than that at which they are written into the store;
means (415 to 419) for producing a stuffing command when the phase of reading from the store lags the phase of writing into the store by a predetermined amount;
means (421) responsive to the stuffing command for inhibiting the sequential reading from the store of digital signals in respect of a predetermined frame of the superframe whereby said predetermined frame is stuffed;
means (105) for transmitting the stuffing command as part of said digital information to identify the superframe including the stuffed frame; and
means (1407, 1408) at a receiver of the system for reconstructing the timing of the asynchronous source and responsive to the stuffing command to ignore the stuffed information in said predetermined frame.

12. A system as claimed in claim 5 characterized in that the means (104, 109, 111, 113) for determining which channels are active and which channels carry background noise comprises:—

a speech detector (109) for detecting speech signals on a transmit path, for each channel for each superframe;
an off-hook detector (113) for determining for each channel, for each superframe, whether the channel is in an off-hook state;
an echo detector (111) for detecting, for each channel for each superframe, signals on the transmit path which are echoes of signals on a receive path; and
gating means (1216, 1218) for producing, for each channel for each superframe, a signal representing that the channel is active if speech signals which are not echoes are detected on the transmit path and the channel is in the off-hook state, and a signal representing that the channel carries background noise if speech signals are not detected on the transmit path and the channel is in the off-hook state.

13. A system as claimed in claim 12 characterized in that the off-hook detector (113) comprises means (1101) for detecting speech signals on a receive path, for each channel for each superframe, and means (1109 to 1120) responsive, for each channel, to a plurality of consecutive detections of speech signals for the channel, by said speech detector (109) or by said means (1101) for detecting speech signals, occurring within a preceding predetermined number of superframes to produce a signal representing that the channel is in the off-hook state.

14. A system as claimed in claim 12 characterized by means (116) for producing, for each superframe, from the digital signals of the channels an average signal for each channel, said detectors (109, 111, 113) each being responsive to the average signal for each channel.

## Patentansprüche

1. Verfahren zur Verringerung des Rauschsignalkontrastes in einem mehrkanaligen Übertragungssystem mit digitaler Sprachinterpolation, mit folgenden Schritten:

Bestimmen (104) jedes Kanals, der aktiv ist und jedes Kanals, der Hintergrund-Rauschen trägt; und
Übertragen (103, 104) der aktiven Kanäle;

dadurch gekennzeichnet, daß die Kanäle, welche Hintergrundrauschen tragen, mit einer Auflösung übertragen werden, die von der Anzahl der übertragenen Kanäle abhängt und reduziert wird, sobald die Anzahl erhöht wird.

2. Verfahren nach Anspruch 1, dadurch gekennzeichnet, daß der Bestimmungsschritt bei jedem Kanal folgende Schritte umfaßt:

Erfassen (109) von Sprachsignalen auf einem Übertragungsweg des Kanals;
Bestimmen (113), ob der Kanal im Zustand mit abgenommenem Hörer ist;
Erfassen (111) von Echos auf dem Übertragungsweg der Sprachsignale bei einem Empfangsweg des Kanals;
Bestimmen (104), daß der Kanal aktiv ist, falls Sprachsignale, die keine Echos sind, auf dem Übertragungsweg erfaßt werden und der Kanal im Zustand mit abgenommenen Hörer ist; und
Bestimmen (104), daß der Kanal Hintergrund- rauschen trägt, falls keine Sprachsignale auf dem Übertragungsweg erfaßt werden und der Kanal im Zustand mit abgenommenem Hörer ist.

3. Verfahren nach Anspruch 2, dadurch gekennzeichnet, daß bei jedem Kanal der Schritt des Bestimmens (113), ob der Kanal sich im Zustand mit abgenommenem Hörer befindet, folgende Schritte umfaßt:

Erfassen (1101) von Sprachsignalen beim Empfangsweg des Kanals; und
Bestimmen, daß der Kanal sich im Zustand mit abgenommenem Hörer befindet, in Abhängigkeit von der Erfassung von Sprachsignalen an den Übertragungs- und Empfangswegen während einer vorhergehenden vorbestimmten Zeitlänge.

4. Mehrkanaliges Übertragungssystem mit digitaler Sprachinterpolation zum Übertragen einer Vielzahl von digitalen Signalkanälen über ein Verbindungsglied, mit Mitteln (104) zum Bestimmen jedes Kanals, der Hintergrundrauschen trägt (H.R.-Kanal) und jedes Kanals, der aktiv ist; gekennzeichnet durch Mittel (103, 104) zum Übertragen jedes Kanals zusätzlich zu jedem aktiven Kanal, der Hintergrundrauschen trägt, mit einer Auflösung, die von der Anzahl der übertragenen Kanäle abhängt und reduziert wird, wenn die Anzahl erhöht wird.

5. System nach Anspruch 4 mit Mitteln (123) zum Bilden zum Superrahmen welche jeweils eine Vielzahl von Viel-Bit-Rahmen enthalten, dadurch gekennzeichnet, daß die Übertragungsmittel enthalten:

Mittel (103, 104) zum Übertragen einer digitalen Nachricht bezüglich jedes aktiven Kanals in jedem Rahmen des Superrahmens und digitaler Nachrichten bezüglich der H.R.-Kanäle in den Rahmen der Superrahmen;
Mittel (1223) zum Bestimmen von Bit-Zahlen für die digitalen Nachrichten jedes aktiven Kanales und jedes H.R.-Kanales bei jedem Superrahmen in Abhängigkeit von der Anzahl von aktiven Kanälen und H.R.-Kanälen bei dem Superrahmen;
Mittel (103) zur Erzeugung der digitalen Nachrichten jeweils mit der jeweiligen Bit-Zahl aus den Digitalsignalen jedes aktiven Kanals und jedes H.R.-Kanals; und
Mittel (Figur 7A; 1224, 1324, 1325) zur Erzeugung und zum Übertragen bei jedem Superrahmen von digitaler Information bezüglich des Übertragungszustandes jedes Kanals und der bestimmten Bit-Zahl jeder digitalen Nachricht in dem Superrahmen.

6. System nach Anspruch 5, dadurch gekennzeichnet, daß die Mittel (123) zur Bildung von Superrahmen ausgelegt sind zur Bildung jedes Superrahmens mit einem zusätzlichen übergeordneten Informationsrahmen zusätzlich zu der Vielzahl von Rahmen, wobei die digitale Information in dem übergeordneten Informationsrahmen jedes Superrahmens übertragen wird.

7. System nach Anspruch 6, dadurch gekennzeichnet, daß die Mittel (1223) zum Bestimmen der Bit-Zahlen für die digitalen Nachrichten zur Bestimmung einer Anzahl von Bit dienen, die allen digitalen Nachrichten in dem betreffenden Superrahmen gemeinsam ist, wodurch eine vorbestimmte Anzahl von digitalen Nachrichten jeweils mit der bestimmten Bit-Zahl in jedem der Vielzahl von Rahmen des betreffenden Superrahmens übertragen werden kann, wobei die vorbestimmte Zahl größer als die Zahl der aktiven Kanäle ist, und daß die Mittel (103, 104) zum Übertragen der digitalen Nachrichten Mittel (Figur 7D) zum Übertragen der digitalen Nachricht jedes aktiven Kanals in jedem der Vielzahl von Rahmen des betreffenden Superrahmens und zum Übertragen der digitalen Nachricht von H.R.-Kanälen in dem verbleibenden verfügbaren Raum in jedem der Vielzahl von Rahmen enthalten, wobei die Übertragung zyklisch für die H.R.-Kanäle innerhalb der Vielzahl von Rahmen des relevanten Superrahmens bewirkt wird.

8. System nach Anspruch 7, dadurch gekennzeichnet, daß die Mittel (103) zur Erzeugung der digitalen Nachrichten jedes aktiven Kanals aus den Digitalsignalen des Kanals einen nahezu augenblicklich dehnenden (NIC)-Kodierer (Figur 8A) zum Kodieren der Digitalsignale jedes aktiven Signals in jedem Superrahmen enthalten zur Erzeugung eines Maximalsegment-Digitalwertes und einer Vielzahl von NIC-kodierten Werten, wobei jeder NIC-kodierte Wert jeweils eine digitale Nachricht des aktiven Kanals bildet, und daß die Mittel (Figur 7A, 1324, 1325) zum Erzeugen und Übertragen der Digitalinformation Mittel (1324, 1325) zum Übertragen des Maximalsegment-Digitalwertes jedes aktiven Kanals in dem übergeordneten Informationsrahmen des betreffenden Superrahmens enthalten.

9. System nach Anspruch 7, dadurch gekennzeichnet, daß die Mittel (103) zum Erzeugen der Digitalnachrichten jedes H.R.-Kanals aus den Digitalsignalen des Kanals Mittel (Figuren 8B, 8C) enthält zum Weglasen eines oder mehrerer Bits höchster Wertigkeit von jedem Digitalsignal zur Erzeugung der jeweiligen digitalen Nachricht.

10. System nach Anspruch 7, dadurch gekennzeichnet, daß die Mittel (103, 104) zum Übertragen in Abhängigkeit von einer Überlastsituation, in der die Anzahl der aktiven Kanäle gleich oder größer als die vorbestimmte Anzahl von digitalen Nachrichten ist, die in jedem der Vielzahl von Rahmen mit einer vorbestimmten Minimal-Bit-Zahl für jede digitale Nachricht übertragen werden kann, in dem betreffenden Superrahmen nur die vorbestimmte Anzahl von aktiven Kanälen überträgt, wobei jede digitale Nachricht derselben die vorbestimmte Minimal-Bit-Zahl besitzt und H.R.-Kanäle nicht in dem Superrahmen übertragen werden.

11. System nach Anspruch 5, bei dem die Vielzahl von zu übertragenden Digitalsignalkanälen von mindestens einer Quelle abgeleitet sind, die asynchron zur Zeitgabe des Übertragungssystems ist, wobei das System dadurch gekennzeichnet wird, daß es für jede solche Quelle Synchronisierungsmittel (101) enthält, welche jeweils enthalten:

einen Speicher (405);

Mittel (404, 411, 408) zum sequentiellen Einschreiben der Digitalsignale der Kanäle von der Quelle in den Speicher;

Mittel (123, 414, 408) zum sequentiellen Auslesen der Digitalsignale der Kanäle von dem Speicher mit einer höheren Rate, als mit der sie in den Speicher eingeschrieben sind;

Mittel (415—419) zur Erzeugung eines Auffüllbefehls, wenn die Auslesephase aus dem Speicher hinter der Einschreibphase in den Speicher um einen vorbestimmten Betrag nachhängt;

Mittel (421), die in Abhängigkeit von dem Auffüllbefehl das sequentielle Auslesen der Digitalsignale aus dem Speicher mit Bezug auf einen vorbestimmten Rahmen des Superrahmens sperren, wodurch der vorbestimmte Rahmen aufgefüllt wird;

Mittel (105) zum Übertragen des Auffüllbefehls als Teil der Digitalinformation zur Identifizierung des den aufgefüllten Rahmen enthaltenden Superrahmens; und

Mittel (1407, 1408) am Empfänger des Systems zum Wiederherstellen der Zeitgabe der Asynchronquelle und zum Mißachten in Abhängigkeit von dem Auffüllbefehl der aufgefüllten Information in dem vorbestimmten Rahmen.

12. System nach Anspruch 5, dadurch gekennzeichnet, daß die Mittel (104, 105, 109, 111, 113) zum Bestimmen, welche Kanäle aktiv sind und welche Kanäle Hintergrundrauschen tragen, folgende Teile umfaßt:

einen Sprachdetektor (109) zum Erfassen von Sprachsignalen auf einem Übertragungsweg für jeden Kanal für jeden Superrahmen;

einen Detektor (113) für abgenommenen Hörer, zum Bestimmen bei jedem Kanal bei jedem Superrahmen, ob der Kanal sich im Zustand mit abgenommenem Hörer befindet;

einen Echodetektor (111) zum Erfassen bei jedem Kanal bei jedem Superrahmen von Signalen auf dem Übertragungswert, die Echos von Signalen auf einem Empfangsweg sind, und Tormittel (1216, 1218) zum Erzeugen eines Signales bei jedem Kanal bei jedem Superrahmen, das darstellt, daß der Kanal aktiv ist, falls Sprachsignale, die keine Echos sind, an dem Übertragungsweg erfaßt werden und der Kanal sich im abgenommenen Zustand befindet, und ein Signal, das anzeigt, daß der Kanal Hintergrundrauschen trägt, falls keine Sprachsignale an dem Übertragungsweg erfaßt werden und der Kanal sich im abgenommenen Zustand befindet.

13. System nach Anspruch 12, dadurch gekennzeichnet, daß der Detektor (113) für abgenommenen Zustand Mittel (1101) zum Erfassen von Sprachsignalen an einem Empfangsweg für jeden Kanal jedes Superrahmens umfassen, und Mittel (1109—1120) die bei jedem Kanal auf eine Vielzahl von aufeinanderfolgenden Erfassungen von Sprachsignalen für den Kanal durch den Sprachdetektor (109) oder durch die Mittel (1101) zum Erfassen von Sprachsignal ansprechen, welche innerhalb einer vorhergehenden vorbestimmten Anzahl von Superrahmen auftreten, um ein Signal zu erzeugen, das anzeigt, daß der Kanal sich im abgenommenen Zustand befindet.

14. System nach Anspruch 12, gekennzeichnet durch Mittel (116) zur Erzeugung eines Durchschnittssignales für jeden Kanal bei jedem Superrahmen aus den Digitalsignalen des Kanals, wobei die Detektoren (109, 111, 113) jeweils auf das Durchschnittssignal für jeden Kanal ansprechen.

**Revendications**

1. Procédé d'atténuation d'un contraste de signal de bruit dans un système de transmission à interpolation vocale numérique multi-voies, comprenant les étapes:

— de détermination (104) de chaque voie qui est actif et comporte un bruit de fond; et
— de transmission (103, 104) des voies actives; caractérisé par la transmission deu voies qui comportent un bruit de fond avec une résolution qui dépend du nombre de voies transmises et qui est réduite alors que ce nombre augmente.

2. Procédé selon la revendication 1, caractérisé en ce que l'étape de détermination comprend, pour chaque voie, les étapes suivantes:

— la détection (109) de signaux vocaux sur un trajet de transmission de la voie;
— la détermination (113) du fait que la voie se trouve à l'état de décrochage;
— la détection (111) d'échos dans le trajet de transmission des signaux vocaux sur un trajet de réception de la voie;
— la détermination (104) que la voie est active si des signaux vocaux qui ne sont pas des échos sont détectés dans le trajet de transmission et la voie se trouve à l'état de décrochage; et
— la détermination (104) que la voie comporte un bruit de fond si des signaux vocaux ne sont pas détectés dans le trajet de transmission et la voie se trouve à l'état de décrochage.

3. Procédé selon la revendication 2, caractérisé en ce que, pour chaque voie, l'étape de détermination (113) que la voie se trouve à l'état de décrochage comprend les étapes suivantes:

— la détection (1101) de signaux vocaux dans le trajet de réception de la voie; et
— la détermination que la voie se trouve à l'état de décrochage en fonction de la détection de signaux vocaux dans les trajets de transmission et de réception pendant une période antérieure prédéterminée.

4. Système de transmission à interpolation vocale numérique multi-voies pour la transmission d'une pluralité de voies de signaux numériques via une liaison de transmission, comprenant un moyen (104) pour déterminer chaque voie qui comporte un bruit de fond (canal b.f.) et chaque voie qui est active, caractérisé par des moyens (103, 104) pour transmettre, en plus de chaque voie active, chaque voie qui comporte un bruit de fond avec une résolution qui dépend du nombre de voies transmises et qui est réduite alors que ce nombre augmente.

5. Système selon la revendication 4, et comprenant un moyen (123) pour former des supertrames, comprenant chacune une pluralité de trames multi-bits, caractérisé en ce que le moyen de transmission comprend:

— un moyen (103, 104) pour transmettre un message numérique en compte de chaque voie active dans chacune des trames de la supertrame et des messages numériques en compte des voies b.f. dans les trames des supertrames;
— un moyen (1223) pour déterminer pour chaque supertrame, en fonction des nombres de voies actives et de voies b.f. pour cette supertrame, les nombres de bits pour les messages numériques de chaque voie active et de chaque voie b.f.;
— un moyen (103) pour produire les messages numériques, chacun du nombre respectif de bits, à partir des signaux numériques de chaque voie active et de chaque voie b.f.; et
— un moyen (figure 7A; 1224, 1324, 1325) pour produire et transmettre, pour chaque supertrame, une information numérique concernant l'état de transmission de chaque voie, et le nombre déterminé de bits de chacun des messages numériques, dans cette supertrame.

6. Système selon la revendication 5, caractérisé en ce que le moyen (123) pour former des supertrames est disposé de manière à former chaque supertrame avec une trame d'information d'aménagement, supplémentaire, s'ajoutant à la pluralité de trames, cette information numérique étant transmise dans ladite trame de chaque supertrame.

7. Système selon la revendication 6, caractérisé en ce que le moyen (1223) permettant de déterminer le nombre de bits pour les messages numériques sert à déterminer un nombre de bits qui est commun à tous les messages numériques dans la supertrame concernée, d'où il résulte qu'un nombre prédéterminé des messages numériques, chacun avec le nombre déterminé de bits, peut être transmis dans chacun de la pluralité de trames de la supertrame concernée, ce nombre prédéterminé étant supérieur au nombre de voies actives et où les moyens (103, 104) pour transmettre les messages numériques comprennent un moyen (figure 7D) pour transmettre le message numérique de chaque voie active dans chacune de la pluralité de trames de la supertrame concernée et pour transmettre les messages numériques de voies b.f. dans l'espace disponible restant dans chacune de la pluralité de trames, la transmission étant effectuée cycliquement pour les voies b.f. dans toute la pluralité de trames de la supertrame concernée.

8. Système selon la revendication 7, caractérisé en ce que le moyen (103) pour produire les messages numériques de chaque voie active à partir des signaux numériques de la voie comprend un codeur (figure 8A) de compression-extension presque instantanée (CEPI) pour coder les signaux numériques de chaque voie active dans chaque supertrame pour produire une valeur numérique maximum de segment maximum et une pluralité de valeurs codées (CEPI), chaque valeur codée (CEPI) constituant un message respectif des messages numériques de la voie active, et où le moyen (figure 7A, 1324, 1325) pour produire et transmettre l'information numérique comprend un moyen (1324, 1325) pour transmettre la valeur numérique de segment maximum de chaque voie active dans la trame d'information d'aménagement de la supertrame concernée.

9. Système selon la revendication 7, caractérisé en ce que le moyen (103) pour produire les messages numériques de chaque voie b.f. à partir des signaux numériques de la voie comprend un moyen (figures 8B, 8C) pour omettre un ou plusieurs bits d'amplitude de poids fort dans chaque signal numérique et produire le message numérique respectif.

10. Système selon la revendication 7, caractérisé en ce que le moyen (103, 104) de transmission répond à une situation de surcharge, dans laquelle le nombre de voies actives est égal ou supérieur au nombre prédéterminé de messages numériques qui peuvent être transmis dans chacune de la pluralité de trames avec un nombre minimum prédéterminé de bits pour chaque message numérique, afin de transmettre dans la supertrame concernée seulement ce nombre prédéterminé de voies actives avec chaque message numérique de celles-ci ayant le nombre minimum prédéterminé de bits, les voies b.f. n'étant pas transmises dans la supertrame.

11. Système selon la revendication 5, caractérisé en ce que la pluralité de voies de signaux numériques devant être transmises provient d'au moins une source qui est asynchrone par rapport à la synchronisation du système de transmission, ce système étant caractérisé en ce qu'il comprend en outre, pour chaque source, un moyen de synchronisation (101) comportant:

— une mémoire (405);
— un moyen (404, 411, 408) pour écrire les signaux numériques des voies à partir de la source séquentiellement dans la mémoire;
— un moyen (123, 414, 408) pour lire les signaux numériques des voies séquentiellement à partir de la mémoire à un débit supérieur à celui auquel ils sont écrits dans la mémoire;
— un moyen (415 à 419) pour produire un ordre de remplissage lorsque la phase de lecture de la mémoire est en retard par rapport à la phase d'écriture dans la mémoire suivant une quantité prédéterminée;
— un moyen (421) répondant à l'ordre de remplissage pour inhiber la lecture séquentielle dans la mémoire des signaux numériques au compte d'une trame prédéterminée de la supertrame, grâce à quoi la trame prédéterminée est remplie;
— un moyen (105) pour transmettre l'ordre de remplissage comme partie de l'information numérique de manière à identifier la supertrame comprenant la trame remplie; et
— un moyen (1407, 1408) à un récepteur du système pour reconstruire la synchronisation de la source asynchrone et répondant à l'ordre de remplissage pour ignorer l'information remplie dans la trame prédéterminée.

12. Système selon la revendication 5, caractérisé en ce que le moyen (104, 109, 111, 113) permettant de déterminer les voies qui sont actives et les voies qui comportent un bruit de fond comprend:

— un détecteur de parole (109) pour détecter des signaux vocaux sur un trajet de transmission, pour chaque voie pour chaque supertrame;
— un détecteur d'état de décrochage (113) pour déterminer pour chaque voie, pour chaque supertrame, si la voie est à l'état de décrochage;
— un détecteur d'écho (111) pour détecter, pour chaque voie pour chaque supertrame, des signaux sur le trajet de transmission qui sont des échos de signaux sur un trajet de réception; et
— un moyen de portes (1216, 1218) pour produire, pour chaque voie pour chaque supertrame, un signal représentant que la voie est active si des signaux vocaux qui ne sont pas des échos sont détectés sur le trajet de transmission et la voie est à l'état de décrochage, et un signal représentant que la voie comporte un bruit de fond si des signaux vocaux ne sont pas détectés sur le trajet de transmission et la voie est à l'état de décrochage.

13. Système selon la revendication 12, caractérisé en ce que la détecteur d'état de décrochage (113) comprend un moyen (1101) pour détecter des signaux vocaux sur un trajet de réception, pour chaque voie pour chaque supertrame, et un moyen (1109, à 1120) répondant, pour chaque voie, à une pluralité de détections consécutives de signaux vocaux pour la voie, par le détecteur de parole (109) ou par le moyen (1101) permettant de détecter des signaux vocaux, se produisant à l'intérieur d'un nombre prédéterminé antérieur de supertrames afin de produire un signal indiquant que la voie est dans l'état de décrochage.

14. Système selon la revendication 12, caractérisé par un moyen (116) pour produire, pour chaque supertrame, à partir des signaux numériques des voies, un signal moyen pour chaque voie, les détecteurs (109, 111, 113) répondant chacun au signal de moyenne pour chaque voie.

106

DIGROUP 1 INPUT

101

SYNCHRONIZERS & MULTIPLEXER

102

103

ENCODER & BUFFER

107

105

COMBINER

DSI OUTPUT

DIGROUP 2 INPUT

116

OFFSET REMOVER & AVERAGING CIRCUIT

123

TIMING SIGNAL GENERATOR

124

104

ASSIGNMENT CONTROL UNIT

108

TRANSMITTER SIGN BIT

119

115

TRANSMITTER AVERAGE T

109

SPEECH DETECTOR

110

112

117

ECHO DET. DISABLE CIRCUIT

121

122

111

ECHO DETECTOR

120

118

113

OFF-HOOK DETECTOR

114

RECEIVER SIGN BIT

RECEIVER AVERAGE RA

FROM RECEIVER

FIG.1

0 047 588

FIG.2

**0 047 588**

FIG.3

3

FIG. 4

8-BIT PCM FROM DIGROUP 2

8-BIT PCM

403

401

405

4 PAGE RAM — IN, OUT, AD

SELECTOR — IN, OUT, SL

102

402

6

409

407

408

WRITE ADDRESS

SELECTOR

READ ADDRESS — SL

L.S.B. OF CHANNEL ADDRESS

SIGNALLING INFORMATION

406

INTERFACE & SIGNAL EXTRACTING CIRCUIT

DIGROUP 1 INPUT

404

410

413

COUNTER — QA, QB, CK

411

412

COUNTER — QA, QB, CK, EN

414

415

416 FLIP-FLOP — R, S, Q, Q̄

FLIP-FLOP — CK, D, Q̄

421

RFR

STUFFING COMMAND

420

419

418 FLIP-FLOP — D, Q, Q̄, CK, S

417

SAFi

5 M.S.B.s OF TRANSMITTER CHANNEL ADDRESS

4

FIG.5

0 047 588

FIG. 6

FIG. 7A

FIG. 7B

7

FIG. 7C

FIG. 7D

9

FIG. 8A

FIG.8B

FIG. 8C

FIG. 9

FIG. 10